# EUROPEAN PATENT APPLICATION

(11) **EP 4 791 038 A2**
(43) Date of publication of application: **12.08.2026**
(21) Application number: 26157329.9
(22) Date of filing: 09.02.2026
(51) Int. Cl.: H04R 25/00, H04R 1/10, H04R 1/02

(54) **HEARING INSTRUMENT AND VISION DEVICE SYSTEMS**

(30) Priority: 10.02.2025 US 202563756587 P; 29.01.2026 US 202619464308
(71) Applicant: Starkey Laboratories, Inc., Eden Prairie, MN 55344 (US)
(72) Inventor: AUSTIN, William Franklin, Eden Prairie, 55344 (US); BHOWMIK, Achintya Kumar, Eden Prairie, 55344 (US); SHAHAR, Amit, Eden Prairie, 55344 (US); BOTZ, Alexander, Eden Prairie, 55344 (US); MARQUARDT, Daniel, Eden Prairie, 55344 (US); SROUR, Majd, Eden Prairie, 55344 (US); GRANGE, Jacques, Eden Prairie, 55344 (US)
(74) Representative: Crowell & Moring U.K. LLP

(57) **Abstract**

A system includes a hearing instrument and a vision device configured to be worn concurrently by a user. The hearing instrument receives an indication of a direction from the vision device. One or more processors of the hearing instrument receive first audio data representing sound detected by one or more microphones. The processors generate second audio data based on the first audio data, representing a version of the detected sound in which portions arriving from the indicated direction are enhanced. A receiver generates output sound based on the second audio data.

## Description

This application claims priority to and the benefit of U.S. Provisional Patent Application 63/756,587, filed February 10, 2025, and U.S. Application No. 19/464,308, filed January 29, 2026, the entire contents of which are incorporated by reference.

### TECHNICAL FIELD

This disclosure relates to hearing instruments and vision devices.

### BACKGROUND

Hearing instruments are devices designed to be worn on, in, or near one or more of a user's ears. Common types of hearing instruments include hearing assistance devices (e.g., "hearing aids"), earbuds, headphones, hearables, cochlear implants, and so on. In some examples, a hearing instrument may be implanted or integrated into a user. Some hearing instruments include additional features beyond just environmental sound-amplification. For example, some modern hearing instruments include advanced audio processing for improved functionality, controlling and programming the hearing instruments, wireless communication with external devices including other hearing instruments (e.g., for streaming media), and so on.

Vision devices are devices designed to be worn on a user's head and include one or more lenses positioned in front of one or more of the user's eyes. Common types of vision devices include head-mounted displays (HMDs) and smart glasses. In some examples, the lenses provide vision correction or protection. Furthermore, in some examples, the vision devices display mixed reality (MR) or augmented reality (AR) elements.

### SUMMARY

This disclosure describes systems that include hearing instruments and vision devices. As described herein, hearing instruments and vision devices may interact with one another to provide functionality. Interactions between hearing instruments and vision devices may allow the hearing instruments and the vision device to use their respective advantages in order to provide superior results for users. Moreover, the combination of one or more hearing instruments and a vision device may enable functionality not possible by hearing instruments or the vision device individually.

In one example, this disclosure describes a system comprising: a hearing instrument configured to be worn by a user, the hearing instrument comprising: a communication system configured to receive an indication of a direction from a vision device configured to be worn by the user concurrently with the hearing instrument; one or more microphones; one or more processors configured to: receive first audio data representing detected sound that is detected by the one or more microphones; and generate second audio data based on the first audio data, wherein the second audio data represents a version of the detected sound in which portions of the detected sound arriving at the one or more microphones from the direction are enhanced; and a receiver configured to generate output sound based on the second audio data.

The details of one or more aspects of the disclosure are set forth in the accompanying drawings and the description below. Other features, objects, and advantages of the techniques described in this disclosure will be apparent from the description, drawings, and claims.

### BRIEF DESCRIPTION OF DRAWINGS

FIG. 1 is a conceptual diagram illustrating an example system that includes one or more hearing instruments, in accordance with one or more techniques of this disclosure.
FIG. 2 is a block diagram illustrating an example system that includes hearing instruments and a vision device, in accordance with one or more techniques of this disclosure.
FIG. 3 is a block diagram illustrating example components of a hearing instrument, in accordance with one or more aspects of this disclosure.
FIG. 4 is a block diagram illustrating example components of a vision device, in accordance with one or more aspects of this disclosure.
FIG. 5 is a conceptual diagram illustrating an example antenna system in which at least portions of antennas of hearing instruments are located within pull cords of the hearing instruments, in accordance with one or more techniques of this disclosure.
FIG. 6 is a conceptual diagram illustrating an example patch antenna system, in accordance with one or more techniques of this disclosure.
FIG. 7 is a conceptual diagram illustrating an example planar inverted-F antenna (PIFA), in accordance with one or more techniques of this disclosure.
FIG. 8 is a conceptual diagram illustrating an example system in which hearing instruments include near-field magnetic induction (NFMI) coils and a vision device includes NFMI coils, in accordance with one or more techniques of this disclosure.
FIG. 9 is a conceptual diagram illustrating an example of system in which hearing instruments include behind-the-ear components, in accordance with one or more techniques of this disclosure.
FIG. 10 is a conceptual diagram illustrating an example vision device with flexible tethers for speakers or sound tubes to conduct sound from speakers, in accordance with one or more techniques of this disclosure.

### DETAILED DESCRIPTION

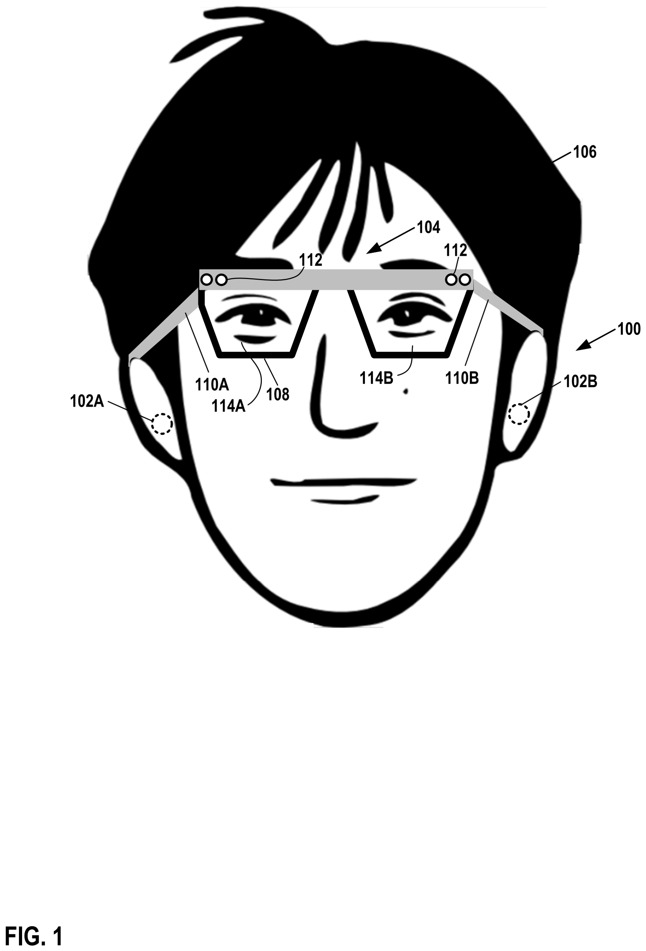

FIG. 1 is a conceptual diagram illustrating an example system 100 that includes hearing instruments 102A, 102B, and a vision device 104, in accordance with one or more techniques of this disclosure. This disclosure may refer to hearing instruments 102A and 102B collectively, as "hearing instruments 102." A user 106 may wear hearing instruments 102 and vision device 104 concurrently. In some instances, user 106 may wear a single hearing instrument. In other instances, user 106 may wear two hearing instruments, with one hearing instrument for each ear of user 106. System 100 does not include user 106.

Hearing instruments 102 may include one or more of various types of devices that are configured to provide auditory stimuli to user 106 and that are designed for wear and/or implantation at, on, near, or in relation to the physiological function of an ear of user 106. Hearing instruments 102 may be worn, at least partially, in the ear canal or concha. One or more of hearing instruments 102 may include behind-the-ear (BTE) components that are worn behind the ears of user 106. In some examples, hearing instruments 102 include devices that are at least partially implanted into or integrated with the skull of user 106. In some examples, one or more of hearing instruments 102 provides auditory stimuli to user 106 via a bone conduction pathway.

In any of the examples of this disclosure, each of hearing instruments 102 may include a hearing assistance device. Hearing assistance devices include devices that help user 106 hear sounds in the environment of user 106. Example types of hearing assistance devices may include hearing aid devices, Personal Sound Amplification Products (PSAPs), cochlear implant systems (which may include cochlear implant magnets, cochlear implant transducers, and cochlear implant processors), bone-anchored or osseointegrated hearing aids, and so on. In some examples, hearing instruments 102 are over-the-counter, direct-to-consumer, or prescription devices. Furthermore, in some examples, hearing instruments 102 include devices that provide auditory stimuli to user 106 that correspond to artificial sounds or sounds that are not naturally in the environment of user 106, such as recorded music, computer-generated sounds, or other types of sounds. For instance, hearing instruments 102 may include so-called "hearables," earbuds, earphones, or other types of devices that are worn on or near the ears of user 106. Some types of hearing instruments provide auditory stimuli to user 106 corresponding to sounds from the user's environment and also artificial sounds. In some examples, hearing instruments 102 may include cochlear implants or brainstem implants.

In some examples, one or more of hearing instruments 102 includes a housing or shell that is designed to be worn in the ear for both aesthetic and functional reasons and encloses the electronic components of the hearing instrument. Such hearing instruments may be referred to as in-the-ear (ITE), in-the-canal (ITC), completely-in-the-canal (CIC), or invisible-in-the-canal (IIC) devices. In some examples, one or more of hearing instruments 102 may be behind-the-ear (BTE) devices, which include a housing worn behind the ear that contains all of the electronic components of the hearing instrument, including the receiver (e.g., a speaker). The receiver conducts sound to an earbud inside the ear via an audio tube. In some examples, one or more of hearing instruments 102 are receiver-in-canal (RIC) hearing assistance devices, which include housings worn behind the ears that contains electronic components and housings worn in the ear canals that contains receivers. In some examples, the shape of the shell may be customized for an individual user. In some examples, the shape of the shell may be selected from a plurality of different available shapes.

Hearing instruments 102 may implement a variety of features that help user 106 hear better. For example, hearing instruments 102 may amplify the intensity of incoming sound, amplify the intensity of certain frequencies of the incoming sound, translate or compress frequencies of the incoming sound, receive wireless audio transmissions from hearing assistive listening systems and hearing aid accessories (e.g., remote microphones, media streaming devices, and the like), and/or perform other functions to improve the hearing of user 106. In some examples, hearing instruments 102 implement a directional processing mode in which hearing instruments 102 selectively amplify sound originating from a particular direction (e.g., to the front of user 106) while potentially fully or partially canceling sound originating from other directions. In other words, a directional processing mode may selectively attenuate off-axis unwanted sounds. The directional processing mode may help user 106 understand conversations occurring in crowds or other noisy environments. In some examples, hearing instruments 102 use beamforming or directional processing cues to implement or augment directional processing modes.

In some examples, hearing instruments 102 reduce noise by canceling out or attenuating certain frequencies. Furthermore, in some examples, hearing instruments 102 may help user 106 enjoy audio media, such as music or sound components of visual media, by outputting sound based on audio data wirelessly transmitted to hearing instruments 102.

Hearing instruments 102 may be configured to communicate with each other. For instance, in any of the examples of this disclosure, hearing instruments 102 may communicate with each other using one or more wireless communication technologies. Example types of wireless communication technology include Near-Field Magnetic Induction (NFMI) technology, 900MHz technology, BLUETOOTH^{™} technology, WI-FI ^{™} technology, audible sound signals, ultrasonic communication technology, infrared communication technology, inductive communication technology, or other types of communication that do not rely on wires to transmit signals between devices. In some examples, hearing instruments 102 use a 2.4 GHz frequency band for wireless communication. In examples of this disclosure, hearing instruments 102 may communicate with each other via non-wireless communication links, such as via one or more cables, direct electrical contacts, and so on.

In addition to hearing instruments 102, user 106 may also wear vision device 104. The term "vision device" is intended to be construed broadly to refer to any head mounted device, including but not limited to, smart glasses and head-mounted displays. Vision device 104 may include a frame 108 containing lenses 114A, 114B (collectively, "lenses 114"). One or more of lenses 114 may be a vision correction lens. In other examples, one or more of lenses 114 do not provide vision correction. Lenses 114 may be fully or partially transparent.

Vision device 104 may also include one or more arms 110A, 110B (collectively, "arms 110") connected to frame 108 that, when vision device 104 is worn, extend over the ears of user 106. Vision device 104 may include one or more sensors 112. Examples of sensors 112 may include cameras, microphones, health parameter sensors, motion sensors, proximity sensors, and so on.

In some examples, vision device 104 may include a display system that enables user 106 to see virtual visual content. The virtual visual content may include visual content that is visible to user 106 but that is not present in the real world. Example virtual visual content may include text, 2-dimensional images, 3-dimensional images, and so on. The virtual visual content may include at least one of mixed reality (MR) content and augmented reality (AR) content. In general, AR overlays digital content onto the real world, enhancing the user's perception of their environment. AR does not interact with the physical world but adds layers of information. In general, MR blends the physical and digital worlds, allowing for interaction between real and virtual objects. MR creates a more immersive experience by integrating digital content into the user's environment.

Hearing instruments 102 and vision device 104 may communicate with one another. In some examples, hearing instruments 102 and vision device 104 communicate with one another using near-field magnetic induction (NFMI) or near-field communication (NFC). In some examples, hearing instruments 102 and vision device 104 may communicate with one another using a short-range wireless communication technology, such as Bluetooth, Bluetooth Low Energy (BLE), or ZigBee. In some examples, hearing instruments 102 and vision device 104 may communicate with one another using sound (e.g., ultrasonic signals). In some examples, hearing instruments 102 and vision device 104 may communicate with one another in multiple ways.

Hearing instruments 102 and vision device 104 may each include one or more processors configured to perform various processing functions. Discussion in this disclosure of system 100 performing processing tasks may encompass instances where processors of hearing instruments 102 and/or processors of vision device 104 perform the processing tasks. Similarly, discussion in this disclosure of actions involving system 100 may be performed by hearing instruments 102 and/or vision device 104.

As noted above, hearing instruments 102 and vision device 104 may communicate with one another. For example, vision device 104 may send data to hearing instruments 102 that allow hearing instruments 102 to perform certain functions. The data may be audio data and/or other types of data (e.g., side-chain data). Likewise, in some examples, one or more of hearing instruments 102 may send data to vision device 104 that allow vision device 104 to perform certain functions. The data may be audio data and/or other types of data (e.g., side-chain data). In the above examples, side-chain data refers to a parallel, filtered, or analyzed signal path which provides reference data and/or signal processing information, for example, to improve the sound quality in the (main) audio signal, e.g., to trigger gain adjustments in the (main) audio signal, to manage, for instance, sudden noises or to boost soft sounds in specific frequency bands, ensuring the sound fits within the user's dynamic range, to detect noise, to improve the signal-to-noise ratio, to address stability issues and/or to enhance speech intelligibility.

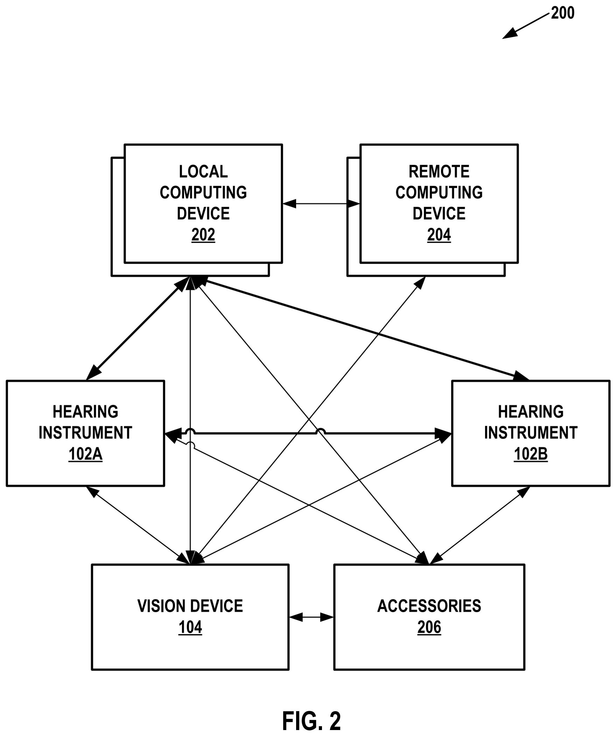

FIG. 2 is a block diagram illustrating an example system 200 that includes hearing instruments 102 and vision device 104, in accordance with one or more techniques of this disclosure. In some examples, hearing instruments 102 may communicate directly with one another. For instance, hearing instruments 102 may communicate with each other via a wireless communication link. Communication between hearing instruments 102 may be referred to as ear-to-ear (E2E) communication.

Hearing instruments 102 may also communicate with vision device 104. Hearing instruments 102 may communicate with vision device 104 in one or more ways. For example, each of hearing instruments 102 may communicate with vision device 104 via a wireless communication link. In some examples, the wireless communication link is a radio frequency (RF) communication link. In some examples, the wireless communication link is a near-field communication (NFC) link, a near-field magnetic inductance (NFMI) communication link, or another type of wireless communication link.

In some examples, hearing instruments 102 may communicate with each other via vision device 104. For example, wireless signals emitted by hearing instrument 102A may be detected by a first antenna of vision device 104 that is proximate hearing instrument 102A. Vision device 104 may include one or more electrical conductors that conduct one or more electrical signals based on the wireless signals to a second antenna of vision device 104 that is proximate hearing instrument 102B. The second antenna of vision device 104 may emit wireless signals detected by hearing instrument 102B. Because the distance that the wireless signals emitted by hearing instrument 102A need to travel to arrive at the first antenna of vision device 104 is significantly shorter than the distance from hearing instrument 102A to hearing instrument 102B around the user's head, the wireless signals do not need to be as powerful. This can help to conserve battery power of hearing instrument 102A. Additionally, hearing instrument 102B may need to apply less gain to the wireless signal detected by hearing instrument 102B. This can help to conserve battery power of hearing instrument 102B. Hearing instrument 102B may communicate with hearing instrument 102A via vision device 104 in the same way. However, in some examples, processors 308 of hearing instruments 300 may detect a removal of vision device 104 (e.g., user 106 taking off vision device 104) and in response to detecting the removal of the vision device, use an antenna (e.g., one or more of antennas 352) for ear-to-ear wireless communication with the other hearing instrument.

In some examples, hearing instruments 102 may communicate directly with one or more local computing devices 202. For example, hearing instruments 102 may emit RF signals that are detected by local computing devices 202. Similarly, local computing devices 202 may emit RF signals that are detected by hearing instruments 102. Local computing devices 202 may be computing devices that are in relatively close proximity to hearing instruments 102. For example, local computing devices 202 may include mobile phones, tablet computers, laptop computers, local wireless network gateways (e.g., WiFi routers), wearable devices (e.g., smart watches, health monitors, etc.) of user 106 or another user, and so on.

Additionally, in some examples, vision device 104 may communicate directly with one or more of local computing devices 202. For example, vision device 104 may communicate with one or more of local computing devices 202 via a wireless communication link. In some examples, hearing instruments 102 may communicate with one or more of local computing devices 202 via vision device 104. That is, vision device 104 may relay data transmitted by hearing instruments 102 to one or more of local computing devices 202 and vision device 104 may relay data transmitted by one or more of local computing devices 202 to hearing instruments 102. By enabling hearing instruments 102 to communicate with local computing devices 202 via vision device 104, the wireless signals emitted by hearing instruments 102 to communicate with vision device 104 may be less powerful than wireless signals that hearing instruments 102 may need to emit to directly communicate with local computing devices 202. Hence, communicating indirectly via vision device 104 may help to conserve battery power of hearing instruments 102.

Local computing devices 202 may communicate with one or more remote computing devices 204. Remote computing devices 204 may include network base stations, communication satellites, cellular network gateways, server devices, and so on. In some examples, hearing instruments 102 and/or vision device 104 may communicate with remote computing devices 204 via one or more local computing devices 202.

In some examples, vision device 104 may communicate directly with one or more of remote computing devices 204. For example, vision device 104 may include a cellular network antenna that enables vision device 104 to communicate with a cellular network gateway using a cellular wireless communication technology, such as 4G, 5G, 6G, and so on. Hearing instruments 102 may communicate with remote computing devices 204 via vision device 104. For example, hearing instruments 102 may communicate with a server device via vision device 104 or via vision device 104 and one or more of local computing devices 202. Given the small sizes of hearing instruments 102, it may not otherwise be possible for hearing instruments 102 to communicate directly with remote computing devices 204.

In some examples, hearing instruments 102 may communicate directly with one or more accessories 206. Accessories 206 may include table microphones, media streamer devices, and other types of devices configured to be used conjunction with hearing instruments 102. In some examples, hearing instruments 102 may communicate with accessories 206 via vision device 104 and/or one or more of local computing devices 202.

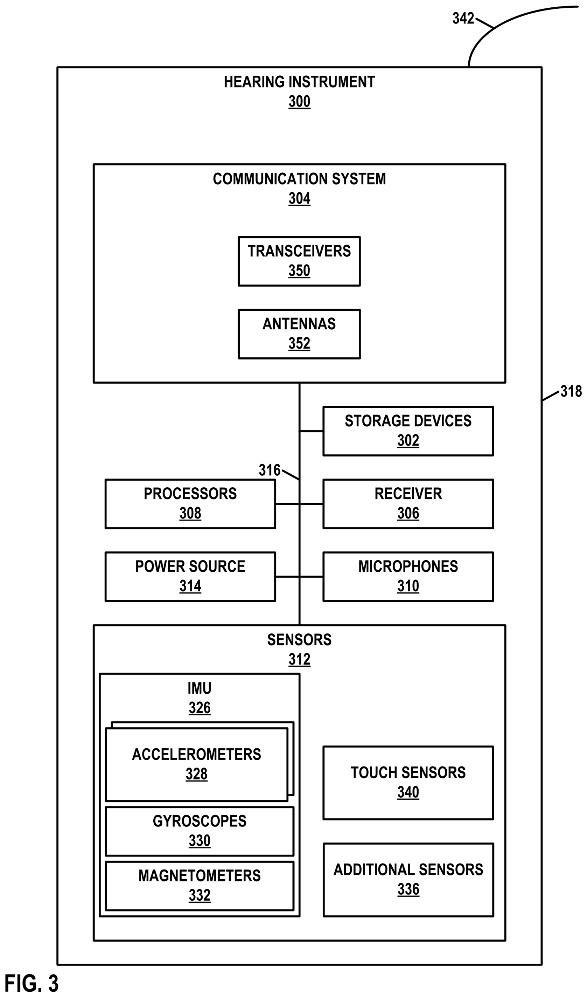

FIG. 3 is a block diagram illustrating example components of a hearing instrument 300, in accordance with one or more aspects of this disclosure. Hearing instrument 300 may be one of hearing instruments 102A or 102B. Thus, the discussion of FIG. 3 may apply with respect to either or both of hearing instruments 102. In the example of FIG. 3, hearing instrument 300 includes one or more storage devices 302, one or more communication systems 304, one or more receivers 306, one or more processors 308, one or more microphones 310, a set of sensors 312, one or more power sources 314, and one or more communication channels 316. Communication channels 316 provide communication between storage devices 302, communication systems 304, receivers 306, processors 308, microphones 310, and sensors 312. Storage devices 302, communication systems 304, receivers 306, processors 308, microphones 310, sensors 312, and communication channels 316 may draw electrical power from power source 314.

In some examples, hearing instrument 300 does not include each component shown in the example of FIG. 3 and/or may include additional components. For instance, in some examples, hearing instrument 300 may include one or more cameras.

In the example of FIG. 3, each of storage devices 302, communication system 304, receiver 306, processors 308, microphones 310, sensors 312, power source 314, and communication channels 316 are contained within a single housing 318. For instance, in examples where hearing instrument 102A includes a BTE component, each of storage devices 302, communication system 304, receiver 306, processors 308, microphones 310, sensors 312, power source 314, and communication channels 316 may be contained within a behind-the-ear housing. In examples where hearing instrument 300 is an ITE, ITC, CIC, or IIC device, each of storage devices 302, communication system 304, receiver 306, processors 308, microphones 310, sensors 312, power source 314, and communication channels 316 may be contained within an in-ear housing. However, in other examples of this disclosure, storage devices 302, communication system 304, receiver 306, processors 308, microphones 310, sensors 312, power source 314, and communication channels 316 are distributed among two or more housings. For instance, in an example where hearing instrument 102A is a RIC device, receiver 306, one or more of microphones 310, and one or more of sensors 312 may be included in an in-ear housing separate from a behind-the-ear housing that contains the remaining components of hearing instrument 300. In such examples, a RIC cable may connect the two housings.

In some examples, housing 318 has a shape that is customized for user 106. Customizing the shape of housing 318 to an individual user, such as user 106, may allow hearing instrument 300 to be inserted deeper into an ear canal of the user, which may reduce visibility of hearing instrument 300. In some examples, housing 318 comprises one or more components (e.g., a shell, faceplate, etc.) having shapes that are customized for user 106. In other examples, the shape of housing 318, or components thereof, is not specific to user 106.

Furthermore, in the example of FIG. 3, sensors 312 include an inertial measurement unit (IMU) 326 that is configured to generate data regarding the motion of hearing instrument 300. IMU 326 may include a set of sensors. For instance, in the example of FIG. 3, IMU 326 includes one or more accelerometers 328, a gyroscope 330, a magnetometer 332, combinations thereof, and/or other sensors for determining the motion of hearing instrument 300. Furthermore, in the example of FIG. 3, hearing instrument 300 may include one or more additional sensors 336. Additional sensors 336 may include a photoplethysmography (PPG) sensor, blood oximetry sensors, blood pressure sensors, electrocardiograph (EKG) sensors, body temperature sensors, electroencephalography (EEG) sensors, environmental temperature sensors, environmental pressure sensors, environmental humidity sensors, skin galvanic response sensors, and/or other types of sensors. In other examples, hearing instrument 300 and sensors 312 may include more, fewer, or different components.

Storage devices 302 may store data. Storage devices 302 may include volatile memory and may therefore not retain stored contents if powered off. Examples of volatile memories may include random access memories (RAM), dynamic random access memories (DRAM), static random access memories (SRAM), and other forms of volatile memories known in the art. Storage devices 302 may include non-volatile memory for long-term storage of information and may retain information after power on/off cycles. Examples of non-volatile memory may include flash memories or forms of electrically programmable memories (EPROM) or electrically erasable and programmable (EEPROM) memories.

Communication system 304 may enable hearing instrument 300 to send data to and receive data from one or more other devices, such as one or more local computing device 202, another hearing instrument (e.g., hearing instrument 102A or hearing instrument 102B), an accessory device, a mobile device, or other types of devices. Communication system 304 may enable hearing instrument 300 to use wireless or non-wireless communication technologies. For instance, communication system 304 may enable hearing instrument 300 to communicate using one or more of various types of wireless technology, such as a BLUETOOTH^{™} technology, 3G, 4G, 4G Long Term Evolution (LTE) , 5G, ZigBee, WI-FI^{™}, Near-Field Magnetic Induction (NFMI), ultrasonic communication, infrared (IR) communication, or another wireless communication technology. In some examples, communication system 304 may enable hearing instrument 300 to communicate using a cable-based technology, such as a Universal Serial Bus (USB) technology. As shown in the example of FIG. 3, communication system 304 may include one or more transceivers 350 and one or more antennas 352. Transceivers 350 may send and receive electrical signals to and from antenna 352. Antennas 352 may include antennas for RF transmission and reception. In some examples, antennas 352 include an NFMI coil.

Receiver 306 includes one or more speakers for generating audible sound. The speakers of receiver 306 may generate sounds that include a range of frequencies. In some examples, the speakers of receiver 306 include "woofers" and/or "tweeters" that provide additional frequency range.

In some examples, hearing instrument 300 includes a removal handle 342 to facilitate removal of hearing instrument 300 from an ear canal of user 106. Removal handle 342 may include an elongated cord extending outward from housing 318 (e.g., outward from a faceplate of housing 318) away from the center of the head of user 106. In some examples, at least a portion of an antenna of hearing instrument 300 is contained within removal handle 342.

Microphones 310 detect incoming sound and generate one or more electrical signals (e.g., an analog or digital electrical signal) representing the incoming sound. In some examples, microphones 310 include directional and/or omnidirectional microphones. In some examples, microphones 310 include one or more inward-facing microphones positioned to face further into an ear canal of user 106. In some examples, hearing instrument 102 may transmit audio data generated based on sound detected by microphones 310 to vision device 104.

Processors 308 include processing circuits configured to perform various processing activities. Example types of processors may include microprocessors, digital signal processors, artificial intelligence (AI) acceleration processors, application-specific integrated circuits (ASICs), and so on. In some examples, processors 308 may process signals generated by microphones 310 to enhance, amplify, or cancel-out particular channels within the incoming sound. Processors 308 may then cause receiver 306 to generate sound based on the processed signals. In some examples, processors 308 include one or more digital signal processors (DSPs). In some examples, processors 308 may cause communication system 304 to transmit one or more of various types of data.

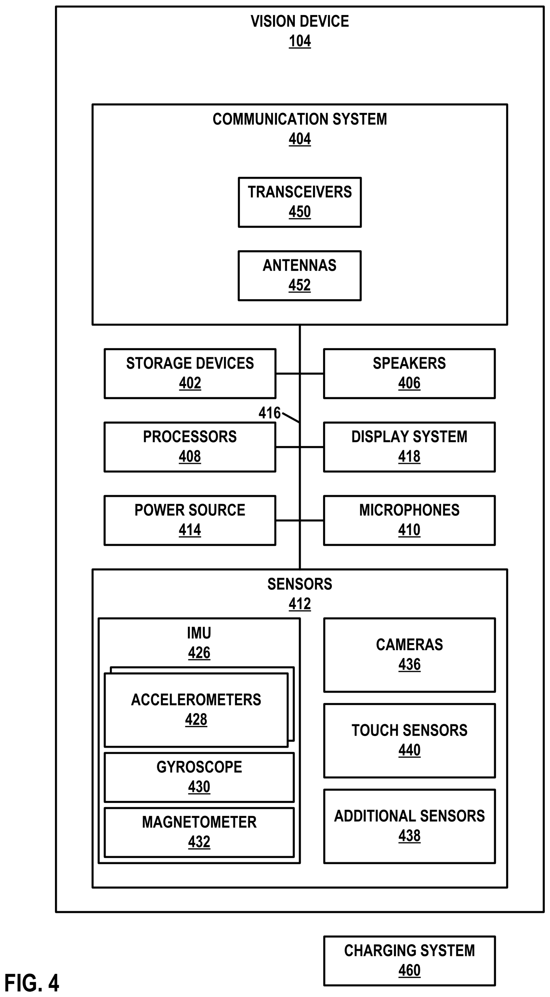

FIG. 4 is a block diagram illustrating example components of vision device 104, in accordance with one or more aspects of this disclosure. In the example of FIG. 4, vision device 104 includes one or more storage devices 402, one or more communication systems 404, one or more speakers 406, one or more processors 408, one or more microphones 410, a set of sensors 412, one or more power sources 414, one or more communication channels 416, and a display system 418. Communication channels 416 provide communication between storage devices 402, communication systems 404, speakers 406, processors 408, microphones 410, sensors 412, and display system 418. Storage devices 402, communication systems 404, speakers 406, processors 408, microphones 410, sensors 412, communication channels 416, and display system 418 may draw electrical power from power source 414. Storage devices 402, processors 408, microphones 410, sensors 412, power source 414, communication channels 416, and other components of vision device 104 may be implemented in that same or similar ways as corresponding parts of hearing instrument 300.

In some examples, vision device 104 does not include each component shown in the example of FIG. 4 and/or may include additional components. For instance, in some examples, vision device 104 does not include one or more of speakers 406 or display system 418.

In some examples, processors 408 of vision device 104 may be more powerful than processors 308 of hearing instruments 102. That is, processors 408 may be able to perform more computational operations in the same amount of time as processors 308. For instance, processors 408 may include more processing cores than processors 308. In some examples, processors 408 may include specialized hardware for artificial intelligence/machine learning applications, while processors 308 do not include such specialized hardware. Thus, as described in greater detail elsewhere in this disclosure, some processing tasks may be more quickly and/or efficiently performed by processors 408 of vision device 104.

Speakers 406 may be configured to output sound. In some examples, speakers 406 generate the sound in air. In some examples, speakers 406 may be configured to use a bone-conduction pathway for providing the sound to user 106. In this disclosure, discussion of outputting sound may apply to either generating in-air sound or sound via a bone-conduction pathway.

Display system 418 may enable vision device 104 to present AR or MR visualizations or other display other types of content. Display system 418 may be implemented in one of a variety of ways. For example, lenses 114 may include see-through waveguides that have surface relief gratings. Projectors of display system 418 may project images onto the gratings, which then direct light into the eyes of user 106. In some examples, display system 418 includes light-emitting diode (LED) arrays or liquid crystal displays.

Display system 418 may include eye tracking sensors (e.g., inward-facing cameras or other types of sensors) that detect the positions of the eyes of user 106. Vision device 104 may use data indicating the positions of the eyes of user 106 to determine how to position virtual elements for display by display system 418.

Vision device 104 may use display system 418 to present various types of information to user 106. For example, display system 418 may display information regarding hearing instruments 102. Example information regarding hearing instruments 102 may include information indicating battery statuses of hearing instruments 102, information indicating sound processing modes of hearing instruments 102, information indicating a direction of a directional processing mode of hearing instruments 102, information regarding health status data generated based on data from sensors 312 of hearing instruments 102 (e.g., heart rate, respiration rate, blood oxygen saturation, and so on).

In some examples, the information regarding hearing instruments 102 may include information generated based on audio data generated by microphones 310. For instance, the microphones of hearing instruments 102 may detect the sound of the voice of user 106. The microphones of hearing instruments 102 may be well-positioned to detect the user's voice because the microphones may be positioned on either side of the origin of the user's voice sounds, allowing system 100 to isolate the user's voice sounds from other sounds detected by the microphones. Vision device 104 may display various types of information based on the user's voice. For example, vision device 104 may present information regarding whether user 106 is speaking at an appropriate volume.

In some examples, system 100 may track a conversation involving user 106 and provide suggestions regarding a next word or phrase for user 106 to say. For example, system 100 may provide audio data or a transcript of the conversation (or just a voice signal of user 106) to an artificial intelligence system, hosted, e.g., by one of local computing devices 202, remote computing devices 204, or by system 100 itself. The artificial intelligence system (e.g., a large language model (LLM)) may predict the next word or phrase for user 106. Vision device 104 may display the next word or phrase for user 106 to say. This may be helpful in a variety of scenarios. For example, providing suggestions on the next word or phrase to say may be helpful if user 106 has memory loss issues. In another example, providing suggestions on the next word or phrase to say may be helpful if user 106 is learning a foreign language and could be helped by hints about what to say next.

In some examples, display system 418 may display information related to a volume of one or more hearing instruments 102. In some examples, display system 418 may display information regarding a current mode of hearing instruments 102 (e.g., a mode to enhance intelligibility, a noise reduction mode, etc.

In some examples, system 100 may perform an environment classification process to identify an acoustic environment of user 106. Example techniques for identifying an acoustic environment may be found in U.S. patent US8,494,193 B2, U.S. patent publication 2023/0276182 A1, and U.S. patent 12,035,107 B2, the entire content of each of which are incorporated herein by reference. Example types of acoustic environments may include restaurants, vehicles, quiet environments, water-noise environments, and so on. Thus, in some examples, communication system 304 of hearing instrument 300 may transmit first data (e.g., acoustic classification data) to vision device 104, receive second data from vision device 104 generated based on the first data, and generate second audio data based on first audio data and the second data.

System 100 may apply one or more machine learning (ML) models to input data (e.g., audio data, image data, and/or other types of data) to identify the acoustic environment. Display system 418 may display a visual indication of the identified acoustic environment. In some examples, system 100 may receive feedback from user 106 to confirm the identified acoustic environment or to indicate that the current acoustic environment is a different type of acoustic environment. The feedback may be used to further train the one or more ML model that identify acoustic environments.

In some examples, display system 418 may display user interface controls for selecting equalizer settings, such as bass levels, midrange levels, and treble levels. User 106 may want different equalizer settings depending on whether user 106 is listening to music or engaged in other activities. System 100 may change equalizer settings in response to user input. In some examples, system 100 may prompt user 106 to indicate whether they would like to change the equalizer settings based on detecting music. In other words, system 100 may analyze audio data from one or more of microphones 310, 410 to determine whether there is music present in the acoustic environment of user 106. If so, system 100 may prompt user 106 (e.g., via display system 418, sound output, etc.) to indicate whether user 106 would like to change equalizer settings to optimize the equalizer settings for music listening. In some examples, system 100 may prompt user 106 to indicate whether user 106 would like to change equalizer settings based on music being present and one or more other factors, such as being in a location where user 106 frequently listens to music or where music is listened to, such as while at home or while at a concert venue.

In some examples, vision device 104 may detect and isolate an own-voice signal of user 106 based on audio data from microphones 410 of vision device 104. Microphones 410 of vision device 104 may include one or more directional microphones configured to receive sound arriving from a direction of the mouth of user 106. For enhanced isolation of the own-voice signal, system 100 may use information about the own-voice signals from microphones 310 and/or sensors 312 of hearing instruments 102. Microphones 310 of hearing instruments 102 may include inward-facing and/or outward-facing microphones. In some examples, a reference own-voice signal may be generated based on sound detected by microphones 310 of hearing instruments 102. In this example, system 100 may use the reference own-voice signal as a basis for extracting an own-voice signal from sound detected by one or more microphones 410 of vision device 104. The own-voice signal isolated from sound detected by the one or more microphones 410 of vision device 104 may have higher fidelity than the reference own-voice signal. In some examples, null-steering may be used for isolation of own-voice signals. Thus, processors 308 of hearing instrument 300 may receive audio data representing detected sound that is detected by one or more microphones 310 and detect an own-voice signal within the audio data. Communication system 304 may be configured to send information regarding the own-voice signal to vision device 104.

Example techniques for own-voice detection are described in U.S. patents 9,473,859, 11,388,529, 11,856,371, and 10,715,931, the entire content of each of which is incorporated by reference.

In some examples, sensors 312 of hearing instruments 102 include one or more vibration sensors. Hearing instruments 102 may determine, based on signals from the one or more vibration sensors, whether user 106 is speaking. Hearing instruments 102 may provide information on whether user 106 is speaking to vision device 104. Vision device 104 may use the information on whether user 106 is speaking to help isolate the own-voice signal from sound detected by one or more microphones 410 of vision device 104. Sending information on whether or not user 106 is speaking may conserve battery power as compared to sending audio data of the reference own-voice signal to vision device 104.

In some examples, system 100 may use the own-voice signal to suppress the sounds of the voice of user 106 in sound output by hearing instruments 102. Microphones 310 of hearing instruments 102 and microphones 410 of vision device 104 may detect the own-voice sounds of user 106. Consequently, the own-voice sounds of user 106 may be included in the sounds that hearing instruments 102 generate. This may result in the own-voice sounds of user 106 being too loud, especially since the source of the user's own-voice sounds is relatively close to microphones 310, 410. This problem may be more prominent when using microphones 410 of vision device 104 because microphones 410 of vision device 104 are closer to the opening of the mouth of user 106 than the ears of user 106 and microphones 310 of hearing instruments 102. By isolating the user's own-voice signal, system 100 may suppress the user's own-voice signal in the sounds output by hearing instruments 102, resulting in a sound level of the own-voice sounds that feels more natural to user 106.

In some examples, vision device 104 may use one or more ML models to detect whether user 106 is speaking. In other words, vision device 104 may apply one or more ML models to audio data (or data generated therefrom) from one or more of microphones 310, 410 to determine whether user 106 is speaking. One or more of hearing instruments 102 may also determine whether user 106 is speaking. Vision device 104 may receive indications of whether user 106 is speaking from one or more of hearing instruments 102. Vision device 104 may use the indications to further train the one or more ML models to detect whether user 106 is speaking. In this way, vision device 104 may be able to more accurately determine whether user 106 is speaking. The one or more ML models may include one or more neural network models or other types of ML models.

Communication system 404 enables vision device 104 to communicate with one or more other devices, such as one or more of hearing instruments 102, local computing devices 202, remote computing devices 204, accessories 206, and so on. As shown in the example of FIG. 4, vision device 104 may include one or more transceivers 450 and one or more antennas 452. Transceivers 450 may convert data into electrical signals. Antennas 452 may emit electromagnetic (EM) radiation based on the electrical signals generated by transceivers 450. Additionally, antennas 452 may generate electrical signals based on changes in an EM field. Transceivers 450 may generate data based on the electrical signals generated by antennas 452.

In some examples, antennas 452 of communication system 404 include a first antenna for communicating with hearing instrument 102A and a second antenna for communicating with hearing instrument 102B. In some such examples, either or both the first antenna and the second antenna may be an NFMI coil or other type of telecoil. In some such examples, either or both the first antenna and the second antenna may be configured for communication using a wireless communication protocol, such as Bluetooth, Bluetooth Low Energy, or another wireless communication protocol for short-range wireless communication. In other examples, communication system 404 may include a single antenna for communicating with both hearing instrument 102A and hearing instrument 102B. In such examples, the single antenna may be an NFMI coil or an antenna configured for communication using a wireless communication protocol.

Furthermore, in some examples, the one or more antennas 452 of communication system 404 include one or more antennas for communication with one or more local computing devices 202. For example, the antenna for communication with local computing devices 202 may be configured to communicate using a wireless communication protocol, such as Bluetooth, Bluetooth Low Energy, WiFi, or another wireless communication protocol for short-range wireless communication. In some examples, the antenna for communications with local computing devices 202 may be the same as the antenna for communications with one or more of hearing instruments 102.

In some examples, the one or more antennas 452 of communication system 404 may include one or more antennas for communication with one or more remote computing devices 204. For example, the antenna for communication with remote computing devices 204 may be configured to communicate using a cellular network standard, such as a 4G, 5G, or 6G wireless communication standard. Vision device 104 may use this antenna to send data to and receive data from one or more computer networks, such as the Internet, without involvement of a local computing device, such as a mobile phone. This may free user 106 from the need to carry a local computing device.

As discussed above, display system 418 may include eye tracking sensors that generate eye tracking data that indicates positions of the eyes of user 106. Vision device 104 may use the eye tracking data to assist with directional sound processing. For example, hearing instruments 102 may use the eye tracking data to enhance voice sounds arriving from a direction in which user 106 is looking. Thus, the eye tracking data generated by the eye tracking sensors may be used both for display processing and sound processing.

As shown in the example of FIG. 4, sensors 412 of vision device 104 may include an IMU 426. IMU 426 may include one or more accelerometers 428, one or more gyroscopes 430, and one or more magnetometers 432. IMU 426 may be implemented in a similar manner as described above with respect to IMU 326 (FIG. 3). Sensors 412 may also include one or more cameras 436, one or more touch sensors 440, and one or more additional sensors 438. Cameras 436 may include still image and/or video cameras. In some examples, user 106 may use cameras 436 to capture still images or video. In some such examples, system 100 may cause one or more of hearing instruments 102 to generate an audible countdown prior to beginning image or video capture.

System 100 may use information from IMU 426 for a variety of purposes. For example, system 100 may use information from IMU 426 to detect whether user 106 has fallen or whether user 106 is experiencing balance issues. Example techniques for detecting whether a user has fallen or is experiencing balance issues are described in U.S. patent 11,277,697, U.S. patent 10,624,559, and U.S. patent 11,638,563, the entire content of each of which is incorporated herein by reference. System 100 may use information from one or more of cameras 436 to confirm whether user 106 has fallen or is experiencing balance issues. Fall detection and detection of balance issues is a beneficial feature in hearing instruments, especially for elderly users. Using information from IMU 426 of vision device 104 to detect falls and balance issues may allow this functionality to be maintained but may allow the IMUs to be removed from hearing instruments 102, thereby reducing size and complexity.

Furthermore, in some examples, hearing instruments 102 and vision device 104 may each include IMUs. Accidental drops of hearing instruments 102 or vision device 104 may be mistaken for the user falling, even though user 106 did not fall. However, it is far more likely for user 106 to drop one of hearing instruments 102 or vision device 104 than it is for user 106 to drop two of hearing instruments 102 and vision device 104 concurrently. Therefore, if system 100 detects IMU signals from two of hearing instruments 102 or vision device 104 (or both hearing instruments 102 and vision device 104) indicative of user 106 falling or having a balance issue, system 100 may determine that user 106 has fallen or is having the balance issue. This may make fall detection and balance issue detection more reliable. Moreover, processing IMU signals from three IMUs located at different positions on the user's head may increase overall reliability of systems for fall detection and balance issue detection.

System 100 may also use signals from IMU 426 for activity detection for user 106. For instance, system 100 may use signals from IMU 426 to detect whether user 106 is walking, running, rowing, driving, etc. In some examples, system 100 may use signals from cameras 436 for visual confirmation of the user's activity. For instance, system 100 may use one or more ML models (hosted, e.g., by vision device 104, one or more of local computing devices 202, or one or more of remote computing devices 204) to detect the activity. In some examples, system 100 may activate one or more of cameras 436 for activity detection if an activity determination based on signals from IMU 426 is ambiguous (e.g., a confidence of activity detection falls below a predetermined confidence threshold). Activating cameras 436 if the activity determination based on signals from IMU 426 is ambiguous may help to conserve battery power of vision device 104 and/or hearing instruments 102, as opposed to constant use of cameras 436 to aid in activity detection.

In some examples, system 100 may use information from one or more cameras 436 to retrieve and playback audio data associated with locations or objects. For example, storage devices 402 of vision device 104 and/or storage devices 302 of hearing instruments 102 may store prerecorded data associated with locations or objects. For instance, storage devices 402, 302 may store audio or text data, or links for retrieving audio or text data containing descriptions of locations or objects. In some examples, system 100 may download the prerecorded data based on a location of system 100. For instance, if system 100 is located in a museum, system 100 may download the prerecorded data associated with the museum.

System 100 may determine, based on image data (e.g., still picture or video data) from one or more cameras 436 of vision device 104 that user 106 is at a location or looking at an object. System 100 may then cause hearing instruments 102 to output sound based on the prerecorded data describing the location or object. In this way, system 100 may act as a virtual audio guide for locations such as museums or tourist attractions. In some examples, system 100 may recognize, in the image data, bar codes, Quick Response (QR) codes or other types of information associated with the location or object. In some examples, system 100 may analyze the image data directly to identify the location or object. In some examples, system 100 may use one or more locations services (e.g., a satellite navigation system, a WiFi-based system, etc.) to determine or help determine locations or objects.

Sensors 412 may include one or more touch sensors 440. Touch sensors 440 are configured to detect physical touch or proximity, enabling interaction with electronic devices through touch-based inputs. Example types of touch sensors include capacitive touch sensors, resistive touch sensors, infrared touch sensors, and surface acoustic wave (SAW) sensors. Each of touch sensors 440 may include a sensor surface, a controller, and driver circuitry. The sensor surface is an area where touch is detected, often made of glass or another durable material. The controller may be a microcontroller or processor that interprets signals from the sensor and converts the signals into digital touch data. The driver circuitry includes electronics that power the sensor and manage signal processing.

Touch sensors 440 may be disposed at various locations on vision device 104. For example, touch sensors 440 may be disposed on one or more of arms 110 or on frame 108. Touch sensors 440 disposed on arms 110 or frame 108 may have linear-shaped touch surfaces, allowing user 106 to make sliding touch gestures along the linear touch surfaces. In some examples, touch sensors 440 may circular-, ellipsoid-, or square-shaped touch surfaces. Because of the form factors of hearing instruments 102 and vision device 104, the touch surfaces of touch sensors 440 may be larger than the touch surfaces of touch sensors (e.g., touch sensors 340) of hearing instruments. The larger touch surfaces of touch sensors 440 of vision device 104 may be helpful for users who have difficulties with fine motor skills.

User 106 may perform various types of touch gestures using touch sensors 440 to provide various types of input to system 100. Example types of touch gestures may include sliding gestures, tapping gestures, multi-touch gestures, pinching gestures, and so on. In one example, one of touch sensors 440 may have a linear-shaped touch surface and may detect a sliding gesture along the linear-shaped surface. In this example, system 100 may adjust an output volume of one or both of hearing instruments 102 based on the sliding gesture. For instance, system 100 may adjust the output volume of one or both of hearing instruments 102 proportional to a length of the sliding gesture. In some examples, system 100 may change an operating mode of hearing instruments 102, activate features of hearing instruments 102, activate memories of hearing instruments 102, and so on with respect to one or both of hearing instruments 102 based on one or more touch gestures. Because user 106 is able to provide input to system 100 using touch sensors 440, there may be less need for user 106 to interact with an application on a mobile device to provide input to system 100. This may result in a more frictionless user experience for user 106.

In some examples, system 100 may adjust a directionality of a directional processing mode of hearing instruments 102 in response to touch gestures detected by touch sensors 440. For example, system 100 may adjust settings of hearing instruments 102 to enhance sounds (e.g., voice sounds) arriving at system 100 from a particular direction. In this example, system 100 may adjust the direction in a leftward direction in response to a touch gesture on one of touch sensors 440 on a left side of vision device 104 (e.g., on arm 110B) and may adjust the direction in a rightward direction in response to a touch gesture on one of touch sensors 440 on a right side of vision device 104 (e.g., on arm 110A). For instance, in this example, system 100 may adjust the direction incrementally in response to tapping touch gestures on touch sensors 440, may adjust the direction in a substantially continuous manner in response to a sustained touch gesture on one of touch sensors 440, or adjust the direction in other ways in response to other types of touch gestures.

In some examples, system 100 may receive user input in the form of combinations of touch gestures on one or more touch sensors (e.g., touch sensors 340) of one or more of hearing instruments 102 and one or more touch sensors 440 of vision device 104. For example, system 100 may perform a first action in response to detecting a touch gesture on a touch sensor of hearing instrument 102A and a concurrent (or within a predetermined time period of) touch gesture on a touch sensor of arm 110B, a second action in response to detecting a touch gesture on a touch sensor of hearing instrument 102B and a concurrent (or within a predetermined time period of) touch gesture on a touch sensor of arm 110A, and so on.

In some examples, system 100 may use data from one or more of sensors 412 to determine whether user 106 is wearing vision device 104. For example, additional sensors 438 of vision device 104 may include one or more infrared (IR) sensors. The IR sensors may detect IR radiation, such as that emitted by the human body. System 100 may determine whether user 106 is wearing vision device based on data generated by the IR sensors. In some examples, system 100 may use data from one or more of cameras 436 to determine whether user 106 is wearing vision device 104.

In some examples, system 100 may use data from IMU 426 of vision device 104 to determine whether user 106 has taken vision device 104 off. For instance, if a motion signal generated by IMU 426 of vision device 104 does not indicate motion consistent with vision device 104 being worn, system 100 may determine that user 106 is not wearing vision device 104. In some examples, system 100 may determine that user 106 is not wearing vision device 104 based on a comparison of motion data from IMU 426 of vision device 104 and data from IMUs 326 of one or more of hearing instruments 102 to determine whether the motion of vision device 104 is consistent with motion of hearing instruments 102.

In some examples, system 100 may use information regarding wireless communication links between hearing instruments 102 and vision device 104 to determine whether user 106 is wearing hearing instruments 102 and/or vision device 104. For example, system 100 may determine whether user 106 is wearing hearing instruments 102 and/or vision device 104 based on one or more of a Received Signal Strength Indicator (RSSI) of an advertising channel of a Bluetooth radio link, an RSSI of a Bluetooth data connection, or another link performance metric. In some examples, system 100 may determine whether user 106 is wearing hearing instruments 102 and/or vision device 104 based on a state of a Bluetooth Low Energy (BLE) connection between hearing instruments 102 and vision device 104. If the BLE connection is present and hearing instruments 102 and vision device 104 are powered on, system 100 may determine that user 106 is wearing hearing instruments 102 and vision device 104.

In some examples, display system 418 of vision device 104 may display a reminder to user 106 to wear hearing instruments 102 if user 106 is not wearing hearing instruments 102. In some examples, hearing instruments 102 may detect whether user 106 is wearing vision device 104, e.g., by attempting to communicate with vision device 104 using a short-range communication system (e.g., NFMI). If user 106 is wearing one or more of hearing instruments 102 and not wearing vision device 104, the one or more hearing instruments 102 may output an audible indication for user 106 to wear vision device 104.

In some examples, processors of hearing instruments 102 (e.g., processors 308) may be configured to apply one or more ML models, such as neural networks, to provide various types of functionalities. For example, hearing instruments 102 may apply one or more ML models for purposes of sound processing. Storing such ML models in storage devices of hearing instruments 102 (e.g., storage devices 302) may impose significant storage requirements on hearing instruments 102, which may require increased size and complexity of hearing instruments 102. Vision device 104, on the other hand, may have more area to accommodate larger storage devices. In accordance with one or more techniques of this disclosure, storage devices 402 of vision device 104 may store some or all data associated with one or more ML models and transfer them to hearing instruments 102 as needed. In this way, hearing instruments 102 may swap in and swap out data associated with ML models from vision device 104 as needed without needing to use higher amounts of energy for communicating with local computing devices 202 or remote computing devices 204.

In some examples, storage devices of 402 of vision device 104 may store higher-resolution versions of ML models than storage devices of hearing instruments 102. For instance, values of parameters of ML models stored by storage devices 402 of vision device 104 may have a greater bit depth than values of the parameters of the ML models stored by storage devices of hearing instruments. System 100 may use the higher-resolution versions of the ML models when user 106 is wearing vision device 104 and may use the lower-resolution versions of the ML models stored on hearing instruments 102 when user 106 is not wearing vision device 104. Thus, hearing instruments 102 may still be able to apply the ML models when user 106 is not wearing vision device 104 but a quality of output of the ML models may be greater when user 106 is wearing vision device 104. For example, hearing instruments 102 may apply an ML model to audio data to detect a type of a current acoustic environment of user 106. In this example, hearing instruments 102 may adjust audio output settings based on the current acoustic environment. In this example, if user 106 is wearing vision device 104, processors 408 of vision device 104 may apply a higher-resolution ML model to detect the current acoustic environment of user 106. In this example, vision device 104 may then send information to hearing instruments 102 indicating a type of the current acoustic environment.

In some examples, processors of one or more of hearing instruments 102 (e.g., processors 308) and processors 408 of vision device 104 may be configured to perform a shared process. The shared process may be a process that can be performed by either vision device 104 or one or more of hearing instruments 102. In such examples, the processors of hearing instruments 102 may perform the shared process if user 106 is not wearing vision device 104. For instance, the processors of hearing instruments 102 may apply an ML model if user 106 is not wearing vision device 104 and processors 408 of vision device 104 may apply the ML model if user 106 is wearing vision device 104. Power source 414 of vision device 104 may be larger (and/or processors 408 of vision device 104 may be faster and/or more efficient). Thus, performing the shared process on vision device 104 may conserve power at hearing instruments 102. Examples of shared processes may include application of ML models, sound processing (e.g., directional processing, noise reduction, own-voice isolation, etc.), acoustic environment classification, and so on. In some examples, processors 308 of hearing instruments 102 may offload some processing tasks to processors 408 of vision device 104. In some examples, processors 408 of vision device 104 may offload some processing tasks to processors 308 of hearing instruments 102.

In some examples, system 100 may determine which of hearing instruments 102 and vision device 104 is to perform a shared process based on battery power levels of hearing instruments 102 and vision device 104. For example, vision device 104 may perform the shared process if battery power levels of one or more of hearing instruments 102 is low (e.g., lower than a threshold). Conversely, one or more hearing instruments 102 may perform the shared process if a battery power level of vision device 104 is low (e.g., lower than a threshold). In some examples, system 100 may generate predictions of the battery power levels of vision device 104 and hearing instruments 102 and determine whether vision device 104 or hearing instruments 102 is to perform the shared process based on the predicted battery power levels. For instance, system 100 may predict that a battery power level of vision device 104 may drop below a first threshold in *x₁* hours and that battery power levels of hearing instruments 102 may drop below a second threshold in *y₁* hours if vision device 104 performs the shared process. System 100 may predict that the battery power level of vision device 104 may drop below the first threshold in *x₂* hours and that battery power levels of hearing instruments 102 may drop below the second threshold in *y₂* hours if hearing instruments 102 perform the shared process. System 100 may use such predictions to optimize an overall time that hearing instruments 102 and vision device 104 may be used together. For instance, if the battery power level of vision device 104 is low, hearing instruments 102 may perform the shared process, thereby allowing vision device 104 to operate for longer (while potentially shortening the battery life of hearing instruments), or vice versa.

In some examples, vision device 104 may combine audio signals from two or more microphones 410 of vision device 104 to generate one or more audio signals. In other words, vision device 104 may pre-process audio data. Vision device 104 may transmit the one or more generated audio signals to one or more of hearing instruments 102. The generated audio signals may estimate audio signals that would be detected by microphones 310 of hearing instruments 102.

In some examples, vision device 104 may transmit configuration data to one or more of hearing instruments 102. The configuration data may include information about vision device 104, such as a distance between microphones, IMU data, and so on. Hearing instruments 102 may use the configuration data for various purposes, such as directional sound processing. For example, each of hearing instruments 102 may use the received combined audio signal from vision device 104 to generate an audio signal that is specific to the hearing instrument. For instance, a hearing instrument may use the configuration data to modify the received combined audio signal to make a left-ear specific audio signal or a right-ear specific audio signal. For example, the hearing instrument may use the configuration information to determine a head-related transfer function (HRTF) to apply to the audio signal to generate the audio signal specific to the hearing instrument.

In some examples, vision device 104 may combine audio signals from different microphones 410 into a single audio signal. Vision device 104 may then apply HRTFs to the audio signal to generate ear-specific audio signals. Vision device 104 may then transmit the ear-specific audio signals to different ones of hearing instruments 102. Hearing instruments 102 may then generate sound based on the ear-specific audio signals. Applying the HRTFs may enable vision device 104 to mimic delays and pinna effects that would normally occur with sounds detected by hearing instruments 102 or naturally by user 106.

With respect to directional processing, processors 408 of vision device 104 may determine a direction of a sound source (e.g., a direction toward a speaking person, a direction of a noise source, etc.) based on audio data generated based on sound detected by microphones 410 of vision device 104. Example techniques for sound source separation and direction detection are described in U.S. provisional patent application 63/679,827, which is incorporated herein by reference. Example techniques for directional signal processing are described in U.S. patent publication 2004/0252852 A1, U.S. patent 10,425,745 B1, and U.S. patent 10,341,784 B2, the entire content of each of which is incorporated herein by reference.

Vision device 104 may then transmit an indication of the direction to hearing instruments 102. Processors 308 of hearing instruments 102 may then process audio data generated by microphones 310 of hearing instruments 102 based on the indication of the direction. For example, processors 308 of hearing instruments 102 may modify the audio data to enhance sound arriving from the indicated direction. In some examples, processors 308 of hearing instruments 102 may modify the audio data to attenuate sound arriving from the indicated direction, e.g., to reduce sound from a noise source. Vision device 104 may be better equipped to determine the direction of the sound source because microphones 410 of vision device 104 may be spaced further apart than microphones 310 of hearing instruments 102. Sending the indication of the direction of the sound source to hearing instruments 102 instead of sending audio data modified based on the direction of the sound source to hearing instruments 102 may conserve battery power of hearing instruments 102 and vision device 104.

Vision device 104 and/or hearing instruments 102 may update the direction (and accordingly update how sound is enhanced) based on signals from one or more sensors 312 and/or sensors 412 (e.g., IMU 326, IMU 426, cameras 436, etc.). Thus, hearing instruments 102 may continue to output enhanced sound of a speaking person's voice even if user 106 and the speaking person move relative to one another. For example, if user 106 is walking next to a companion, the hearing instruments 102 may continue to update the direction to output enhanced sound of the companion's voice even as user 106 and the companion move relative to one another.

Thus, in some examples, system 100 includes a hearing instrument 300 configured to be worn by user 106, the hearing instrument 300 comprising communication system 304 configured to receive an indication of a direction from vision device 104 configured to be worn by user 106 concurrently with the hearing instrument. Processors 308 of hearing instrument 300 may receive first audio data representing detected sound that is detected by one or more microphones 310 and may generate second audio data based on the first audio data. The second audio data may represent a version of the detected sound in which portions of the detected sound arriving at the one or more microphones 310 from the direction are enhanced. Receiver 306 may be configured to generate output sound based on the second audio data. In some examples, processors 308 may further modify the first audio data based on an audiogram of user 106. For instance, processors 308 may further modify the first audio data to increase gain in specific frequency bands, as indicated by the audiogram of user 106.

In some examples, vision device 104 may transmit to hearing instruments 102 both an indication of the direction of the sound source and audio data based on sound detected by microphones 410 of vision device 104. This may provide hearing instruments 102 with the ability to generate higher quality output sound because the output sound is generated based on sound detected by multiple microphones. Thus, in the example above, communication system 304 may be configured to receive third audio data from vision device 104 and one or more processors 308 of hearing instrument 300 are configured to generate the second audio data based on the first audio data and the third audio data.

In some examples, a direction of a sound source may be determined (e.g., by vision device 104) based on sensor data from one or more of sensors 412. For example, facial recognition may be applied to sensor data (e.g., video data from cameras 436, infrared reflection data from an IR projection sensor of sensors 412, etc.) to determine a location of a speaking person relative to user 106.

In some examples, vision device 104 may determine, based on one or more of audio data or image data, an identity of a person. The person may be someone visible or audible to user 106. Vision device 104 may generate output indicating the identity of the person. For example, display system 418 may display information identifying the person. Vision device 104 may obtain the audio data via microphones 310 or microphones 410. Vision device 104 may obtain the image data via cameras 436. In some examples, to generate the output, vision device 104 may transmit audio data to hearing instruments 102 containing a name of the person. Hearing instruments 102 may output sound based on the audio data. Identifying the person may help users with memory issues. System 100 may also provide other information about the identified person, such as relationship information, conversation starters, and so on.

In some examples, display system 418 may identify faces of multiple persons and allow user 106 to select which of the persons for whom to receive enhanced sound. For example, display system 418 may show bounding boxes around the faces of multiple people and system 100 may receive indications of user input from user 106 to indicate which of the people should have enhanced sound. This may be useful in a cocktail party situation in which there are several people in the vicinity of user 106 but user 106 is only interested in conversing with a few of those people. In some examples, vision device 104 uses video data from one or more of cameras 436 to determine which of one or more people in a vicinity of user 106 is currently speaking (e.g., based on analysis of lip movements shown in the video data). System 100 may automatically update the direction based on which of the one or more people is currently speaking.

In some examples, system 100 may automatically update the direction to enhance a voice of a speaking person regardless of whether user 106 is looking in a direction of the speaking person. For example, if user 106 and another person are side-by-side, system 100 automatically update the direction to enhance the voice of the person despite user 106 not looking in the direction of the other person. In some examples, system 100 may use information from sensors such as IMUs 326, 426, cameras 436, microphones 310, 410 to track the location of the other user in order to update the direction.

In some examples, display system 418 of vision device 104 may display virtual elements that provide information regarding a beam of enhancement. Sounds from sound sources within an area corresponding to beam of enhancement are enhanced. As an example of virtual elements that provide information regarding the beam of enhancement, display system 418 may display a compass-like virtual element that indicates a direction of enhancement. The virtual elements may also indicate a breadth of the beam of enhancement. A narrow beam of enhancement may allow system 100 to enhance the voice of a single person for enhancement while a broader beam of enhancement may allow system 100 to enhance the voices of multiple people. The virtual elements may also indicate an intensity level of voice enhancement.

System 100 may receive input from user 106 to change one or more aspects of the beam of enhancement, such as the direction, breadth and intensity. The changes may be indicated in the virtual elements displayed by display system 418. In some examples, the input may include touch gestures to one or more of touch sensors 340, 440, voice commands, or other types of input. Thus, in some examples, display system 418 of vision device 104 may be configured to display a user interface that enables user 106 to control the direction. The user interface may indicate the direction, may enable user 106 to control a breadth of a beam within which sounds are enhanced, and so on.

In some examples, system 100 may store identification data for a plurality of specified people. The specified people may be designated "favorited" people of user 106. The identification data may include one or more of voice prints, facial recognition data, or other types of information usable to identify an individual person. User 106 or another person may select the plurality of specified people. The plurality of specified people may include family members, caregivers, coworkers, or other people with whom user 106 is specified or otherwise has previously interacted. System 100 may obtain identification comparison data such as image data from cameras 436, audio data from microphones 310 of hearing instruments 102 and/or microphones 410 of vision device 104, or data from other sources. System 100 may determine, based on the identification data and the identification comparison data, which if any people in the plurality of people are in a vicinity of user 106. If one or more people in the plurality of specified people is in the vicinity of user 106, system 100 may use directional processing or other techniques to enhance sounds produced by the one or more determined specified people.

In some examples, system 100 may detect that a person is present who is not among the plurality of specified people. In response, system 100 may prompt user 106 to indicate whether the person should be added to the plurality of specified people. For example, display system 418 of vision device 104 may display a prompt inviting user 106 to indicate whether the person should be added to the plurality of specified people. In some such examples, display system 418 may display a virtual element (e.g., a virtual bounding box) indicating the person in real-time. In some examples, hearing instruments 102 may output sound to prompt user 106 to indicate whether the person should be added to the plurality of specified people. System 100 may also prompt user 106 to provide a label, such as a name, for the person. In some examples, when system 100 detects that a person is present who is not among the plurality of specified people, system 100 may prompt user 106 to indicate whether to enhance the person's speech and/or reduce or eliminate enhancement of speech of one or more other people.

In some examples, processors 308 of hearing instruments 102 may determine spatial information based on sound detected by microphones 310 of hearing instruments 102. For example, microphones 310 of hearing instruments 102 may be located within the ear canal of user 106. Thus, sound detected by microphones 310 of hearing instruments 102 has arrived at microphones 310 of hearing instruments 102 after at least partially interacting with a pinna of an ear of user 106. For instance, the pinna may introduce reflections, delays, and other acoustic effects into sounds that the user's brain may interpret to help determine the direction of an arriving sound. Additionally, since the microphones 310 of hearing instruments 102 may be located in or near opposite ears of user 106, there may be a delay between when microphones 310 of hearing instruments 102 on opposite ears of user 106 detect sounds. In some examples, processors 308 of hearing instruments 102 may analyze received sounds to detect directions of the sound sources. Hearing instruments 102 may provide information about the directions of sound sources to vision device 104. In some examples, hearing instruments 102 may provide audio data representing sound detected by microphones 310 of hearing instruments 102 to vision device 104 and vision device 104 may use the audio data to determine the directions of the sound sources. Accuracy of the determination of the sound sources based on audio data from microphones 310 of hearing instruments 102 may be improved relative to accuracy of the determination of sound sources based on audio data from microphones 410 of vision device alone because of the locations of microphones 310 of hearing instruments 102 in or near the ear canals of user 106.

In some examples, if user 106 is wearing hearing instruments 102 and also wearing vision device 104, one or more components of hearing instruments 102 or vision device 104 may be disabled. For example, system 100 may disable one or more microphones (e.g., one or more of microphones 310), one or more sensors (e.g., sensors 312), one or more antennas (e.g., antennas 352), etc.) of one or more of hearing instruments 102 when user 106 is wearing vision device 104 and the functionality of the components is replicated by components of vision device 104. This may help to conserve battery power of hearing instruments 102, which may be more limited than battery power of vision device 104, while still preserving the ability of hearing instruments 102 to use the components when user 106 is not wearing hearing instruments 102. In some examples, if user 106 is wearing hearing instruments 102 and also wearing hearing vision device 104, one or more components of vision device 104 may be disabled. For example, system 100 may disable speakers 406 of vision device 104 when user 106 is wearing one or more of hearing instruments 102. Thus, one or more sensors 412 of vision device 104 may be configured to detect a presence of one or more of hearing instruments 102 and one or more processors 408 of vision device 104 may be configured to suspend sound generation of the one or more speakers 406 of vision device 104 in response to the one or more sensors 412 detecting the presence of the one or more hearing instruments 102.

In some examples, processors 408 of vision device 104 may perform one or more shared processes if user 106 is not wearing one or more of hearing instrument 102. For example, processors 408 of vision device 104 may determine whether user 106 is wearing hearing instruments 102 (e.g., by attempting to communicate with hearing instruments 102 using a short-range communication system (e.g., NFMI)). If user 106 is wearing vision device 104 but not wearing hearing instruments 102, processors 408 of vision device 104 may process audio detected by microphones 410 of vision device 104 and speakers 406 of vision device 104 may output the processed audio. For example, processors 408 may process the audio according to an audiogram of user 106. In this way, user 106 may still be able hear the processed audio, albeit potentially without the privacy or audio fidelity of using hearing instruments 102 for this purpose. In some examples, processors 408 of vision device 104 may perform fall and/or balance detection if user 106 is not wearing hearing instruments 102 and hearing instruments 102 may perform fall and/or balance detection if user 106 is not wearing vision device 104.

In some examples, communication systems (e.g., communication system 304) of hearing instruments 102 are configured to receive streaming media data (e.g., streaming audio data) from one or more devices, such as accessories 206, local computing device 202, or remote computing devices 204. If user 106 is wearing hearing instruments 102 and vision device 104, communication system 404 of vision device 104 may receive the streaming media data and then retransmit the streaming media data to hearing instruments 102. Vision device 104 may retransmit the streaming media data to hearing instruments 102 using a relatively low-power system (e.g., NFMI), allowing hearing instruments 102 to conserve battery power, or obviating the need for hearing instruments 102 to include antennas capable of efficiently receiving the streaming media data. Conversely, antennas 452 of vision device 104 may be larger and/or more sophisticated than antennas of hearing instruments 102, allowing vision device 104 to receive the streaming media data more efficiently than hearing instruments 102. In some such examples, processors 408 of vision device 104 may process the streaming audio data in one or more ways prior to retransmitting the audio data. For example, vision device 104 may receive encoded audio data, processors 408 of vision device 104 may decode the audio data (e.g., to generate a time-domain signal), and one or more antennas 452 of vision device 104 (e.g., one or more NFMI coils of vision device 104) may transmit the decoded audio data to hearing instruments 102. This may help to conserve processing resources and battery power of hearing instruments 102.

As noted elsewhere in this disclosure, hearing instruments 102 may be configured to output sound based on streaming audio data, such as music. However, the fidelity of the sound is frequently diminished on hearing instruments 102, especially in lower frequency ranges (e.g., a bass range). This is due in part to the small sizes of speakers in hearing instruments 102 and because hearing instruments 102 are typically vented to allow sound to escape from the ear canals of user 106. (User 106 may perceive their own voice to be distorted if sound is prevented from escaping from the ear canals of user 106). Thus, in accordance with one or more techniques of this disclosure, speakers 406 of vision device 104 may output sound in collaboration with speakers of hearing instruments 102. For instance, speakers 406 of vision device 104 may output sound that emphasizes a first frequency range while speakers of hearing instruments 102 concurrently output sound that emphasizes a different frequency range. For instance, speakers 406 of vision device 104 may enhance the bass range of music. Thus, this may give user 106 a fuller range of sound than may be possible when user 106 is listening with hearing instruments 102 alone (especially with hearing instruments 102 that do not occlude the ear canals of user 106). Likewise, this may give user 106 a fuller range of sound (and more privacy) than may be possible when user 106 is listening with speakers 406 of vision device 104 alone.

In some instances, microphones 410 of vision device 104 may detect sound generated by receivers of hearing instruments 102. Similarly, microphones 310 of hearing instruments 102 may detect sound generated by speakers 406 of vision device 104. This may lead to feedback. System 100 may modify audio signals to reduce such feedback. For example, system 100 may use null steering to attenuate sounds arriving at microphones 310 from the directions of speakers 406 and/or to attenuate sounds arriving at microphones 410 from the directions of receivers 306. In some examples, system 100 may perform active noise cancellation (ANC) to attenuate unwanted sounds, such as feedback.

In some examples, system 100 may use image data (e.g., still image data, video data, etc.) from cameras 436 to generate audio data. Hearing instruments 102 may output sound based on the audio data. For example, system 100 may obtain image data representing text. System 100 may then obtain audio data representing a spoken version of the text. Example types of text may include restaurant menus, signs, books, on-screen text content, and so on. In some examples, the audio data may describe people or objects in a scene represented by the image data. For example, the audio data may provide the names or other information about people represented by the image data. Generating sound based on such audio data may help users who have vision impairment, reading difficulties, memory difficulties, or other conditions. In some examples, the sound may include words in a language that user 106 is learning, thereby enabling user 106 to associate words with objects and activities observable in the image data.

In some examples, vision device 104 sends the image data to one or more of local computing devices 202 or remote computing devices 204, which generates the audio data and sends the audio data back to vision device 104, which provides the audio data (or data derived therefrom) to hearing instruments 102. In other examples, the local computing devices 202 or remote computing devices 204 send the audio data directly to hearing instruments 102. In other examples, vision device 104 generates the audio data based on the image data.

In some examples, the image data generated by cameras 436 of vision device 104 may include video of a speaking person, such as a person with whom user 106 is conversing, a person displayed onscreen, another type of person who is talking. The image data may be processed (e.g., by system 100, local computing devices 202, remote computing devices 204, etc.) to enhance speech intelligibility. For example, system 100 may process the video data for interpreting lip movements of the speaking person. For instance, system 100 may be able to identify specific phonemes spoken by the speaking person based on the shapes and motions of the speaking person's lips. As an example, system 100 may be able to distinguish between 'b' and 'd' sounds based on whether the speaking person's lips are initially closed or open. System 100 may modify audio data based on the identified phonemes. For example, system 100 may modify the audio data to emphasize a 'b' sound or a 'd' sound depending on the speaking person's initial lip positions. Speakers 406 of vision device 104 and/or receivers of hearing instruments 102 may output sound based on the modified audio data.

In some examples, system 100 uses the image data generated by cameras 436 of vision device, together with audio data generated by microphones of vision device 104 and/or hearing instruments 102, for purposes of language translation.

In some examples, hearing instruments 102 and vision device 104 may be charged together. For example, a charging system 460 (e.g., a charging case or other device) of vision device 104 may include a system for wirelessly charging hearing instruments 102. Magnets may hold hearing instruments 102 to charging system 460 of vision device 104 to align hearing instruments 102 for wireless charging from vision device 104. Charging system 460 may also be used to wirelessly charge vision device 104. In some examples, vision device 104 may wirelessly charge one or more of hearing instruments 102, or vice versa.

In some examples, hearing instruments 102 and vision device 104 wirelessly communicate using a communication protocol. Many communication protocols include parameters for controlling latency. In accordance with one or more techniques of this disclosure, one or more parameters of a communication protocol may be adjusted to reduce latency of communication between hearing instruments 102 and vision device 104. For instance, a frame interval is a configurable parameter. When a communication protocol uses a relatively longer frame interval, more data tends to accumulate in a transmit buffer before the data is transmitted. Longer frame intervals also tend to allow greater bandwidth sharing between multiple devices because devices are not competing as frequently for time to send data. In other words, if devices are trying to send data as soon as the data is ready to be sent, it is more likely that the devices would be trying to send data at the same time. However, hearing instruments 102 and vision device 104 are in very close proximity to one another and can therefore transmit at such low power that there is not likely to be competition for transmitting on a frequency band with other devices. Accordingly, the frame interval can be set to a relatively short length of time. This may reduce the latency between when data is ready to be sent by hearing instruments 102 and/or vision device 104 and when the hearing instruments 102 and/or vision device 104 actually send the data. Reducing latency may be advantageous for transmission of real-time audio data.

In some examples, a frame interval of wireless signals emitted by hearing instruments 102 is set to a level that allows full airtime of Bluetooth Low Energy (BLE) links for transmission of the first wireless signals and the second wireless signals. In other words, the frame interval of wireless signals emitted by hearing instruments 102 is set to a level that maximizes airtime of BLE links for transmission of the first wireless signals and the second wireless signals. This configuration leverages the close proximity and low-power nature of the hearing instruments 102 and vision device 104, which minimizes the likelihood of interference with other devices sharing the frequency band. By reducing the frame interval to a minimal duration, the system reduces the time data remains in a transmit buffer before transmission. This effectively maximizes the utilization of the Bluetooth Low Energy link's available airtime, thereby reducing latency to a level suitable for real-time audio processing and synchronization between the devices.

In some examples, one or more local computing devices 202 and/or accessories 206 may be a broadcast transmitter. For example, one or more local computing devices 202 and/or accessories 206 may use a wireless protocol, such as Auracast, to transmit audio data on a one-to-many basis. Such broadcast transmitters may be used for streaming audio data, such as audio data from a television, music player, remote microphone, child monitor, sound mixing system, assisted listening devices (ALDs), a venue's sound system, and so on.

Since there may be multiple available broadcast transmitters of the vicinity of system 100, user 106 may need to provide input to select one of the available broadcast transmitters. It may be difficult for user 106 to provide such input when using hearing instruments 102 alone because hearing instruments 102 do not include a screen and have limited ability to receive user input. A local computing device (e.g., one of local computing devices 202) may present a user interface listing available broadcast transmitters. Using such a local computing device may be inconvenient for user 106 and may introduce friction into the user experience.

In accordance with one or more techniques of this disclosure, system 100 may perform a scanning process to determine available broadcast transmitters. In examples where hearing instruments 102 perform the scanning process, hearing instruments 102 may transmit a list of the available broadcast transmitters to vision device 104. In some examples, vision device 104 performs the scanning process. Display system 418 of vision device 104 may display visible elements representing a list of available broadcast transmitters. User 106 may provide input to system 100 (e.g., via hand gestures, voice commands, touch gestures, etc.) to select one of the available broadcast transmitters. After receiving an indication of the user input, system 100 may begin receiving streamed media data from the selected broadcast transmitter. System 100 may receive an indication of user input to begin the scanning process, such as a touch input or a voice command.

In one example, different gates at an airport may be associated with different broadcast transmitters and user 106 may select a broadcast transmitter associated with the user's gate in order to receive announcements associated with the gate. In another example, user 106 may be in a sports bar, gym, or other location where multiple broadcast transmitters are available that convey audio associated with multiple televisions.

In some examples, system 100 may use information from one or more sensors 312, 412 to automatically select a broadcast transmitter. For example, system 100 may analyze image data from one or more cameras 436 to determine a location of system 100. System 100 may then select a broadcast transmitter associated with the location. For example, system 100 may analyze image data to identify text or a code (e.g., a barcode, QR code, etc.) associated with the broadcast transmitter.

In some examples, a broadcast transmitter may require devices to provide a broadcast code in order to be able to access media data broadcast by the broadcast transmitter. For example, the media data may be encrypted and the broadcast transmitter may provide a decryption key to a device if the device provides the credential to the broadcast transmitter. The broadcast code may be posted in the vicinity of the broadcast transmitter. For example, a venue (e.g., a place of worship, event venue, media room, etc.) may post a broadcast code (e.g., a password, a Quick Response (QR) code, a bar code, etc.) associated with the broadcast transmitter. A receiving device may then provide the posted broadcast code to the broadcast transmitter. However, it would be difficult for users to input such broadcast codes into small devices, such as hearing instruments 102.

Hence, in accordance with one or more techniques of this disclosure, one or more of cameras 436 of vision device 104 may capture image data of a posted broadcast code. System 100 may process the image data to extract the posted broadcast code from the image data. In some examples, system 100 may use text recognition to extract the posted broadcast code from the image data. Hearing instruments 102 and/or vision device 104 may then provide the broadcast code to the broadcast transmitter, thereby enabling hearing instruments 102 and/or vision device 104 to access the media data broadcast by the broadcast transmitter. Thus, cameras 436 may be configured to capture image data of a broadcast code for an audio broadcast source; and one or more processors 408 of vision device 104 may be configured to process the image data to enable access to the audio broadcast source.

It may be desirable for hearing instruments 102 to wirelessly communicate with a device, such as one or more local computing devices 202 or accessories 206, with or without involvement of vision device 104. Accordingly, hearing instruments 102 may perform a pairing with the device to establish a secure communication channel with the device. The pairing process may be vulnerable to a man-in-the-middle attack in which a third device is paired with the desired device and pretends to be the desired device for purposes of pairing with hearing instruments 102 and/or vision device 104. In such a man-in-the-middle attack, the third device receives information from hearing instruments 102 and/or vision device 104 and relays the information to the desired device, and vice versa. The third device may inspect and/or alter the information before relaying the information.

Verification codes are a common way to counter such a man-in-the-middle attack. Both of the devices to be paired will independently use a cryptographic process to derive and display a code (e.g., a numerical code). If the codes match, the user may be assured that the devices are communicating directly with one another and not via a third device. However, hearing instruments 102 do not have display screens capable of displaying codes.

Hence, in accordance with one or more techniques of this disclosure, display system 418 of vision device 104 may display a code during a process of pairing a device with hearing instruments 102. User 106 may then verify that the displayed code matches a code displayed by a desired device. During the pairing process, hearing instruments 102 may generate the code and send the code to vision device 104 for display. System 100 (e.g., vision device 104 and/or hearing instruments 102) may receive an indication of user input indicating whether code displayed by vision device 104 matches a code of the desired device. If system 100 receives an indication of user input indicating that the codes match, hearing instruments 102 may finalize pairing with the desired device.

In some examples, system 100 may be used for 2-way voice telecommunication. For example, system 100 may be used for phone calls. In such examples, one or more antennas 452 of vision device 104 may be used for wirelessly communicating data of the voice telecommunication with one or more local computing devices 202 (e.g., a phone of user 106) or one or more remote computing devices 204 (e.g., a cellular base station, communication satellite, etc.). In some such examples, microphones 410 of vision device 104 may detect the own-voice sounds of user 106. Vision device 104 may generate an own-voice signal of user 106 based on the own-voice sounds of user 106. The own-voice signal may have a better acoustic signal-to-noise (SNR) ratio than an own-voice signal generated based on sound detected by microphones 310 of hearing instruments 102 for one or more reasons, such as the positions of microphones 410 of vision device 104, beamforming to enhance sound from a direction of the mouth of user 106, greater processing power of processors 408 of vision device 104, and so on. As described elsewhere in this disclosure, vision device 104 may enhance the own-voice signal based on data regarding own-voice sounds detected by microphones 310 of one or more of hearing instruments 102. Receivers 306 of hearing instruments 102 may output sounds based on audio data received by system 100 as part of the 2-way voice telecommunication.

Thus, in some examples, processors 408 of vision device 104 may be configured to receive audio data from the one or more microphones 410, use a first antenna of antennas 452 to transmit a first wireless signal based on the received audio data to a wireless device (e.g., a mobile phone, wireless base station, etc.), receive additional audio data via the first antenna and use the one or more second antennas of antennas 452 to transmit one or more second wireless signals based on the received additional audio data to the one or more hearing instruments 102. In some such examples, the one or more second antennas of antennas 452 may receive indications of own-voice activity from one or more of hearing instruments 102. Processors 408 of vision device 104 may modify the received additional audio data, based on the indications of the own-voice activity, to generate modified third audio data in which an own-voice signal in the third audio data is enhanced. Processors 408 of vision device 104 may use the first antenna to transmit a wireless signal based on the modified additional audio data to the wireless device.

In some examples, two or more users may wear systems of vision devices and hearing instruments like system 100. In such examples, each of the systems may be configured to detect their users' own-voice signals. The systems (e.g., communication systems 404 of the vision devices) may wirelessly communicate the own-voice signals to each other. The hearing instruments of the systems may then output sound based on the received signals. This may allow the users of the systems to better hear the voices of the other users, especially in noisy situations or situations in which directional sound processing is less suitable. Display system 418 may display virtual elements that allow user 106 to select which other users to communicate with in this way.

In some examples, system 100 may determine a voice intelligibility score for a current acoustic environment of user 106. The voice intelligibility score is a score indication an estimated intelligibility of voices in the current acoustic environment of user 106. System 100 may output the voice audibility score, e.g., via display system 418, speaker 406, receivers 306, etc.

In some examples, system 100 may provide guidance to user 106 to indicate a location where user 106 may go that may have better voice intelligibility. For instance, system 100 may determine a voice intelligibility score gradient and instruct (e.g., via display system 418, speaker 406, receivers 306, etc.) to move in a direction of increasing voice intelligibility scores. In some examples, system 100 may generate the guidance based on an analysis of image data from one or more of cameras 436.

Some users may have multiple vision devices. For instance, user 106 may have a vision device with single-focus lenses, another vision device with multifocal lenses, another vision device with tinted lenses, and so on. Such users may use their vision devices in different circumstances and for different reasons. Because user 106 may switch between vision devices, vision devices (or another device) may receive data from a first vision device, store the data, and send the data back to a second vision device. In this way, a state may be maintained between the first and second vision devices. In some examples, when a vision device detects that user 106 has taken the vision device off, the vision device may transfer data to one or more hearing instruments 102, one or more local computing device 202 or one or more remote computing devices 204, for subsequent retrieval by the vision device or another vision device. When a vision device detects that the vision device is being worn, the vision device may retrieve the data. In this way, state data and other information may be carried across vision devices, providing user 106 with a more seamless experience.

Touching a device, such as hearing instruments 102 and vision device 104, may result in microphones of the device detecting sound resulting from vibrations caused by the touching. These sounds can be loud and disruptive to user 106. For example, if user 106 were to remove vision device 104, receivers 306 of hearing instruments 102 may output, as a result of user 106 touching and moving vision device 104, potentially loud transient sound into the ears of user 106. To address this issue, processors 308 or processors 408 may be configured to detect, based on data from one or more sensors (e.g., IMU 426, touch sensors 440, etc.), a removal of vision device 104 or a movement of vision device 104 relative to hearing instrument 300. Based on detecting the removal of vision device 104 or the movement of vision device 104 relative to hearing instrument 300, processors 408 of vision device 104 may use one or more antennas 452 to transmit a signal to hearing instrument 300 to instruct hearing instrument 300 to suppress output sounds associated with the removal of vision device 104 or the movement of vision device 104 relative to hearing instrument 300.

In some examples, hearing instruments 102 and vision device 104 may use sound to communicate with one another. For example, receiver 306 (or other speaker of hearing instrument 300) may output sound that is detected by one or more microphones 410 of vision device 104. Likewise, one or more speakers 406 of vision device 104 may output sound that is detected by one or more microphones 310 of hearing instrument 300. Hearing instruments 102 and vision device 104 may communicate using sound in addition to, or as an alternative to, using RF signals for communication. The sound may be in a frequency range that is not audible to user 106 or other people. In some examples, a sound tube may direct sound between hearing instrument 300 and vision device 104.

In some examples, system 100 includes vision device 104 and only one hearing instrument. Such a system may be used by people with single-sided hearing loss. In this example, vision device 104 may include microphones 410 on both sides of the head of user 106 despite user 106 only having a hearing instrument on one side of their head. Vision device 104 may perform one or more processing tasks based on audio data received from the hearing instrument and audio data received from the one or more contralateral microphones (i.e., the one or more microphones on the opposite side of the head of user 106 from the hearing instrument). For example, vision device 104 may perform directional processing. In some examples, one or more conductors in vision device 104 may conduct audio data from the one or more contralateral microphones to a communication system that transmits the audio data to the hearing instrument.

In some examples, additional sensors 438 of vision device 104 include one or more temperature sensors. The temperature sensors may measure a temperature at a position close to an ear of user 106. Sensors 312 of hearing instruments 300 may also include a temperature sensor. The user's core body temperature may be determined from the temperature of a user's tympanic membrane. However, it is generally impractical to attach a temperature sensor to the user's tympanic membrane or to use infrared thermography to continuously measure the temperature of the user's tympanic membrane. A temperature gradient exists along the user's ear canal. For example, if an ambient air temperature is colder than the temperature of the user's tympanic membrane, the temperature may decrease from the temperature of the user's tympanic membrane to the ambient temperature at the opening of the user's ear canal. If an ambient air temperature is warmer than the temperature of the user's tympanic membrane, the temperature may increase from the temperature of the user's tympanic membrane to the ambient temperature at the opening of the user's ear canal.

A temperature gradient may be estimated based on temperature measurements at an inner point and an outer point along the user's ear canal. The temperature gradient may then be extrapolated over a distance from the inner point to the user's tympanic membrane, thereby obtaining an estimate of the temperature of the user's tympanic membrane. However, hearing instruments 102 may be quite small and the distance between the inner point and the outer point may be quite short. This may negatively affect the accuracy of the estimated temperature gradient. Additionally, inclusion of two temperature sensors, as opposed to one temperature sensor, in one hearing instrument may undesirably add to the size and complexity of the hearing instrument. In accordance with a technique of this disclosure, system 100 may obtain a temperature measurement from a temperature sensor on vision device 104 and a temperature measurement from a temperature sensor on one of hearing instruments 102. System 100 may then use the temperature measurements to determine the temperature gradient. System 100 may then use the temperature gradient to estimate the temperature of a tympanic membrane of user 106. The distance between the temperature sensor on vision device 104 and the temperature sensor on the hearing instrument may be significantly greater, thereby allowing a more accurate assessment of the gradient. When estimating the temperature gradient, system 100 may assume that the temperature measured by the temperature sensor on vision device 104 is the same as the temperature at an opening of the ear canal of user. System 100 may calculate the temperature as described in Olson et al., "A Continuously Worn Dual Temperature Sensor System for Accurate Monitoring of Core Body Temperature from the Ear Canal", Sensors (Basel). 2023 Aug 22;23(17):7323. doi: 10.3390/s23177323, the entire content of which is incorporated by reference.

In some examples, vision device 104 may receive health information from hearing instruments 102 and storage devices 402 may store the health information. Processors 408 of vision device 104 may be able to perform analyses of the health information more efficiently than processors 308 of hearing instruments.

In some examples, system 100 may obtain biometric data from sensors 412 and sensors 312 and use the biometric data for security purposes. For example, sensors 412 of vision device 104 may include image sensors that can perform an iris scan of user 106. In this example, microphones of hearing instruments 102 may detect an own-voice signal of user 106. System 100 may require a successful iris identification and successful voice print identification to authenticate a user. After authenticating user 106, system 100 may grant user 106 with access to protected information or settings (e.g., using audio via hearing instruments 102 or video using vision device 104). In some examples, after authenticating user 106, system 100 may be used for making purchases.

In some examples, cameras 436 of vision device 104 may include one or more inward-facing cameras configured to capture images or video of the eyes of user 106. In some such examples, system 100 may use image data (e.g., video data) from the inward-facing cameras to detect nystagmus of user 106.

As described above, each of hearing instruments 102 and vision device 104 may include one or more antennas. The antennas may be implemented in a variety of ways.

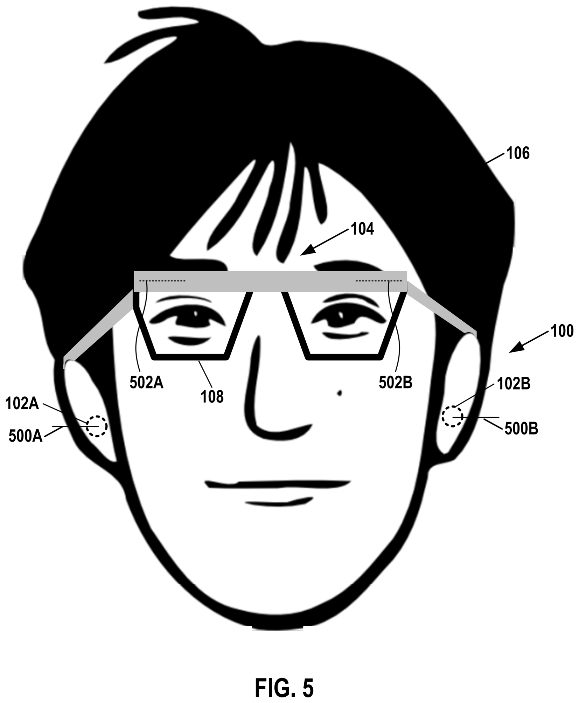

FIG. 5 is a conceptual diagram illustrating an example antenna system in which at least portions of antennas of hearing instruments 102 are located within pull cords of hearing instruments 102, in accordance with one or more techniques of this disclosure. Particularly, in the example of FIG. 5, antenna elements are located in pull cords 500A, 500B (collectively, "pull cords 500"). The antenna elements located in pull cords 500 may each form at least part of an antenna. Pull cords 500 are designed at least in part to enable users to pull hearing instruments 102 out of the ear canals of users' ears. The lengths of pull cords 500 may be exaggerated in the example of FIG. 5 for ease of understanding. In general, pull cords 500 extend in lateral directions away from a midline of the head of user 106. In other words, pull cords 500 (and the antenna elements included therein) may extend in a direction that is generally orthogonal to a sagittal plane of the body of user 106. The antenna elements in pull cords 500 may form monopole antennas.

Furthermore, as illustrated in the example of FIG. 5, vision device 104 includes antenna elements 502A, 502B (collectively, "antenna elements 502"). Antenna elements 502 may each form at least part of an antenna. Antenna elements 502 may be oriented to extend in a direction orthogonal to the sagittal plane of the body of user 106. Since antenna elements 502 extend in generally the same direction as the antenna elements included in pull cords 500, power transfer between antenna elements 502 and the antenna elements included in pull cords 500 may be maximized relative to other orientations of antenna elements 502 and the antenna elements included in pull cords 500.

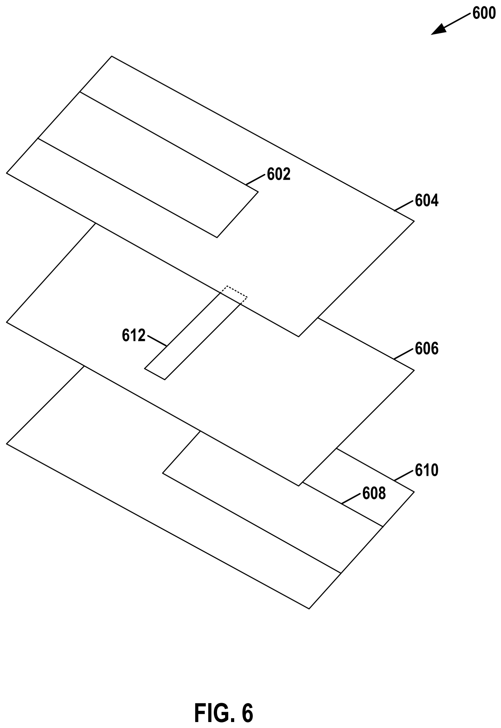

FIG. 6 is a conceptual diagram illustrating an example patch antenna system 600, in accordance with one or more techniques of this disclosure. In the example of FIG. 6, antenna system 600 includes a microstrip 602 located on a substrate 604, a ground plane 606, and a microstrip 608 located on a substrate 610. In some examples, microstrip 602, substrate 604, and ground plane 606 are located in vision device 104 and microstrip 608 and substrate 610 are located in one of hearing instruments 102. In some examples, microstrip 602 and substrate 604 are located in vision device 104 and ground plane 606, microstrip 608, and substrate 610 are located in one of hearing instruments 102. Ground plane 606 includes a slot 612. Slot 612 is orthogonal to microstrips 602, 608. Antenna system 600 may produce a strong magnetic field on the hearing instrument or vision device 104. Slot 612 may act as a means for aperture coupling.

Antenna system 600 may efficiently transmit wireless signals between vision device 104 and the hearing instrument when at least a portion of the hearing instrument is in physical contact with vision device 104. For example, a behind-the-ear portion of the hearing instrument may include a portion of antenna system 600. In this example, the behind-the-ear portion of the hearing instrument may be coupled (e.g., mechanically coupled, magnetically coupled) to a portion of vision device 104 (e.g., an arm of vision device 104) such that the portion of antenna system 600 included in the hearing instrument is aligned with the portion of antenna system 600 included in vision device 104.

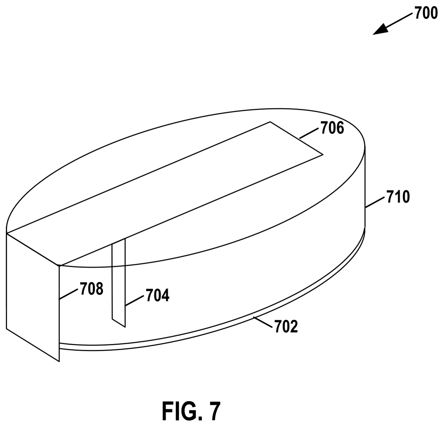

FIG. 7 is a conceptual diagram illustrating an example planar inverted-F antenna (PIFA) 700, in accordance with one or more techniques of this disclosure. In the example of FIG. 7, PIFA 700 includes a ground plane 702, a feed point 704, a patch 706, and a shorting structure 708. A dielectric 710 may separate ground plane 702 and patch 706. PIFA 700 may be located in a faceplate of a hearing instrument (e.g., one of hearing instruments 102). In accordance with one or more techniques of this disclosure, patch 706 may spatially oriented to align with an antenna of vision device 104.

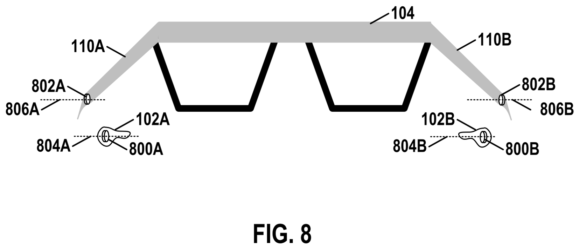

FIG. 8 is a conceptual diagram illustrating an example system in which hearing instruments 102 include NFMI coils 800A, 800B (collectively, "NFMI coils 800") and vision device 104 include NFMI coils 802A, 802B (collectively, "NFMI coils 802"), in accordance with one or more techniques of this disclosure. Each of NFMI coils 800, 802 may include windings of a wire around a core. Axes 804A, 804B (collectively, "axes 804") of NFMI coils 800 may be aligned with axes 806 of NFMI coils 802. Axes 804 and axes 806 may correspond to lengthwise directions of cores of NFMI coils 800, 802. The cores may be ferrite. Aligning axes 804 with axes 806 may enhance energy transfer between NFMI coils 800 and NFMI coils 802.

In some examples, vision device 104 may include a plurality of NFMI coils with differently oriented axes. For instance, each arm 110 of vision device 104 may include two or more NFMI coils, each with differently oriented axes. Vision device 104 may select NFMI coils from among the plurality of NFMI coils. For instance, vision device 104 may select NFMI coils based on strengths of signals detected by the plurality of NFMI coils. In this example, vision device 104 may calculate a received signal strength indicator (RSSI) for each of the NFMI coils and select the NFMI coils based on the RSSIs. Vision device 104 may then use the selected NFMI coils for communication with hearing instruments 102.

In the example of FIG. 8, axes 804 and axes 806 are generally orthogonal to a sagittal plane of user 106. In other examples, axes 804 and axes 806 may be aligned in other ways. For example, NFMI coils 802 may be formed by wrapping a wire around reinforcing metal strips that run lengthwise through or on arms 110 of vision device 104 to reinforce arms 110. Thus, in this example, the axes of NFMI coils 802 of vision device 104 may be generally aligned with a sagittal plane of user 106. Accordingly, in this example, axes 804 of NFMI coils 800 of hearing instruments 102 may be generally aligned with the sagittal plane of user 106.

In some examples, a computing system (e.g., one of remote computing devices 204 or another device) may obtain ear impression data for user 106. The computing system may estimate, based on the ear impression data for user 106, likely orientations of axes 804 of NFMI coils 800 of hearing instruments 102. The computing system may configure a manufacturing system to manufacture one or more components of vision device 104 such that axes 806 are aligned with the likely orientations of axes 804. Thus, vision device 104 may be customized for user 106 or selected from a range of available vision devices. In some examples, the orientations of axes 804 of NFMI coils 800 of hearing instruments 102 may be customized to user 106 or selected from a range of hearing instruments so that axes 804 are likely to align with axes 806.

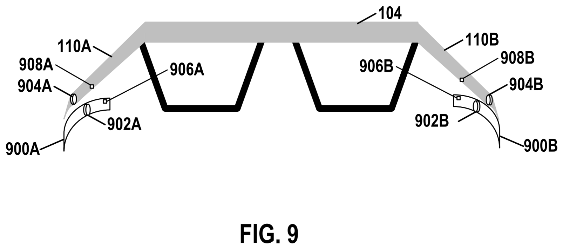

FIG. 9 is a conceptual diagram illustrating an example of system 100 in which hearing instruments 102 include BTE components 900A, 900B, in accordance with one or more techniques of this disclosure. BTE components 900 may be configured for wear above and/or behind the ears of user 106. As shown in the example of FIG. 9, antenna elements 902A, 902B (collectively, "antenna elements 902") may be included in BTE components 900. Corresponding antenna elements 904A, 904B (collectively, "antenna elements 904") may be located in vision device 104. In the example of FIG. 9, antenna elements 902 and antenna elements 904 are shown as NFMI coils. However, in other examples, antenna elements 902 and antenna elements 904 may be other types of antennas and/or antenna elements. For example, one or more of antenna element 902 may be PIFAs, as described above with respect to FIG. 7. In other examples, one or more of antenna elements 902 of hearing instruments 102 may include one or more components of antenna system 600 and one or more of antenna elements 904 of vision device 104 may include one or more components of antenna system 600, as described above with respect to FIG. 6.

BTE components 900 may include alignment components 906A, 906B (collectively, "alignment components 906"). Vision device 104 may include alignment components 908A, 908B (collectively, "alignment components 908"). Alignment components 906 and alignment components 908 serve to align BTE components 900 with vision device 104. Aligning BTE components 900 with vision device 104 may help to maximize power transfer of wireless communication between antenna elements 902 and antenna elements 904. For example, alignment components 906 and alignment components 908 may help to align axes of NFMI coils of hearing instruments 102 and NFMI coils of vision device 104.

Alignment components 906 and alignment components 908 may be implemented in a variety of ways. For example, alignment components 906 and/or alignment components 908 may include magnetic elements to attract and retain BTE components 900 at correct alignments with respect to vision device 104. The magnetic elements may have interacting electric fields. In some examples, alignment components 906 and/or alignment components 908 may mechanically retain BTE components 900 at the correct alignments with respect to vision device 104.

In some examples, housings of BTE components 900 and/or vision device 104 may comprise plastic materials that have high permittivity. The use of high permittivity components may increase capacitance and capacitive coupling. Antenna elements 902 and antenna elements 904 may comprise parallel metalized layers, separated by the plastic materials that serve as a dielectric. The metalized layers may form a capacitive coupling arrangement.

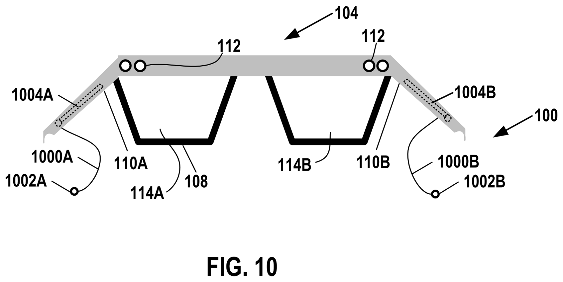

FIG. 10 is a conceptual diagram illustrating an example vision device 104 with flexible tethers for speakers or sound tubes to conduct sound from speakers, in accordance with one or more techniques of this disclosure. In some examples, elements 1000A, 1000B represent flexible tethers may connect vision device 104 to one or more of speakers 406A, 406B of vision device 104. The flexible tethers may allow user 106 to place speakers 406 close to (or directly on) openings for microphones 310 of hearing instruments 102. In such examples, elements 1002A, 1002B represent the speakers. The flexible tethers may conduct electrical signals to hearing speakers 406. This may allow speakers 406 to output sound to microphones 310 of hearing instruments 102 without the sound being audible to other people and may allow speakers 406 to output the sound at lower intensity. In some examples, when not in use, speakers 406 and the flexible tethers may be retained in recesses 1004A, 1004B defined in arms 110 of vision device 104.

In some examples, speakers 406 are located in arms 110 of vision device 104 and elements 1000A, 1000B represent one or more flexible sound tubes configured to direct sound from speakers 406 to openings of microphone 310 of hearing instruments 102. In such examples, elements 1002A, 1002B may represent attachment members that may help to secure sound tubes to hearing instruments 102. In some examples, the attachment members may fully occlude an opening of the ear canals of user 106, which may provide better sound quality during media streaming sessions. When not in use, the sound tubes may be retained in recesses 1004A, 1004B defined in arms 110 of vision device 104.

In this disclosure, ordinal terms such as "first," "second," "third," and so on, are not necessarily indicators of positions within an order, but rather may be used to distinguish different instances of the same thing. Examples provided in this disclosure may be used together, separately, or in various combinations. Furthermore, with respect to examples that involve personal data regarding a user, it may be required that such personal data only be used with the permission of the user.

Examples of the various aspects of this disclosure may be used individually or in any combination. Additional aspects of the disclosure are detailed in numbered clauses below.

Clause 1. A system comprising: a hearing instrument configured to be worn by a user, the hearing instrument comprising: a communication system configured to receive an indication of a direction from a vision device configured to be worn by the user concurrently with the hearing instrument; one or more microphones; one or more processors configured to: receive first audio data representing detected sound that is detected by the one or more microphones; and generate second audio data based on the first audio data, wherein the second audio data represents a version of the detected sound in which portions of the detected sound arriving at the one or more microphones from the direction are enhanced; and a receiver configured to generate output sound based on the second audio data.

Clause 2. The system of Clause 1, wherein the one or more processors are configured to modify the first audio data based on an audiogram of the user.

Clause 3. The system of any of Clauses 1-2, wherein the communication system is configured to receive third audio data from the vision device, and the one or more processors are configured to generate the second audio data based on the first audio data and the third audio data.

Clause 4. The system of any of Clauses 1-3, wherein the one or more microphones are configured to detect second sound; the one or more processors are further configured to: receive third audio data representing second detected sound that is detected by the one or more microphones; and detect an own-voice signal within the third audio data, and the communication system is configured to send information regarding the own-voice signal to the vision device.

Clause 5. The system of any of Clauses 1-4, wherein the communication system is configured to: transmit first data to the vision device; receive second data from the vision device generated based on the first data; and generate the second audio data based on the first audio data and the second data.

Clause 6. The system of Clause 5, wherein the first data is acoustic classification data.

Clause 7. The system of any of Clauses 1-6, further comprising the vision device, wherein the vision device comprises a display system configured to display visible elements representing a list of available audio broadcast transmitters.

Clause 8. The system of any of Clauses 1-7, wherein the one or more processors of the hearing instrument are one or more first processors, and the system further comprises the vision device, wherein the vision device comprises: one or more cameras configured to capture image data of a broadcast code for an audio broadcast source; and one or more second processors configured to process the image data to enable access to the audio broadcast source.

Clause 9. The system of any of Clauses 1-8, further comprising the vision device, wherein the vision device comprises a display system configured to provide information regarding the hearing instrument.

Clause 10. The system of any of Clauses 1-9, further comprising the vision device, wherein the vision device comprises a display system configured to display a user interface that enables the user to control the direction.

Clause 11. The system of Clause 10, wherein the user interface indicates the direction.

Clause 12. The system of any of Clauses 10-11, wherein the user interface enables the user to control a breadth of a beam within which sounds are enhanced.

Clause 13. The system of any of Clauses 1-12, wherein the one or more processors of the hearing instrument are one or more first processors, the system further comprises the vision device, wherein the vision device comprises: one or more speakers; one or more sensors configured to detect a presence of the hearing instrument; and one or more second processors configured to suspend sound generation of the one or more speakers in response to the one or more sensors detecting the presence of the hearing instrument.

Clause 14. The system of any of Clauses 1-13, wherein the one or more microphones of the hearing instrument are one or more first microphones, the one or more processors of the hearing instrument are one or more first processors, and the system further comprises the vision device and the vision device comprises: one or more second microphones; a first antenna configured to communicate with a wireless device; one or more second antennas configured to communicate with the hearing instrument; and one or more second processors configured to: receive third audio data from the one or more second microphones; use the first antenna to transmit a first wireless signal based on the third audio data to the wireless device; receive fourth audio data via the first antenna; and use the one or more second antennas to transmit one or more second wireless signals based on the fourth audio data to the hearing instrument.

Clause 15. The system of Clause 14, wherein the one or more second antennas are configured to receive indications of own-voice activity from the hearing instrument, the one or more second processors are further configured to: modify the third audio data, based on the indications of the own-voice activity, to generate modified third audio data in which an own-voice signal in the third audio data is enhanced, use the first antenna to transmit the first wireless signal based on the modified third audio data to the wireless device.

Clause 16. The system of any of Clauses 14-15, wherein the wireless device is a mobile phone or a wireless base station.

Clause 17. The system of any of Clauses 1-16, wherein the output sound is a first output sound, the one or more processors of the hearing instrument are one or more first processors, and the system further comprises the vision device and the vision device comprises: one or more sensors; one or more antennas; and one or more second processors configured to: detect, based on data from the one or more sensors, a removal of the vision device or a movement of the vision device relative to the hearing instrument; and based on detecting the removal of the vision device or the movement of the vision device relative to the hearing instrument, using the one or more antennas to transmit a signal to the hearing instrument to instruct the hearing instrument to suppress second output sounds associated with the removal of the vision device or the movement of the vision device relative to the hearing instrument.

Clause 18. The system of any of Clauses 1-17, wherein the hearing instrument is a first hearing instrument, the system further comprises the vision device and a second hearing instrument configured to be worn by the user, the vision device comprises: a first antenna configured to receive first wireless signals from the first hearing instrument, a second antenna, and one or more electrical conductors configured to conduct one or more electrical signals based on the first wireless signals to the second antenna, wherein the second antenna is configured to transmit second wireless signals based on the one or more electrical signals to the second hearing instrument.

Clause 19. The system of Clause 18, wherein a frame interval of the first wireless signals and the second wireless signals to set to a level that maximizes airtime of Bluetooth Low Energy (BLE) links for transmission of the first wireless signals and the second wireless signals.

Clause 20. The system of any of Clauses 18-19, wherein the communication system of the first hearing instrument comprises an antenna configured for wireless communication with the second hearing instrument, and the one or more processors of the hearing instrument are further configured to: detect a removal of the vision device; and in response to detecting the removal of the vision device, use the antenna for ear-to-ear wireless communication with the second hearing instrument.

Clause 21. The system of any of Clauses 1-20, wherein the one or more processors are one or more first processors, and the system includes the vision device and the vision device comprises one or more second processors configured to: determine, based on one or more of audio data or image data, an identity of a speaking person; and generate output indicating the identity of the speaking person.

Clause 22. A system comprising: a hearing instrument configured to be worn by a user, the hearing instrument comprising: a communication system configured to receive first audio data from a vision device configured to be worn by the user concurrently with the hearing instrument configured to be worn by the user concurrently with the hearing instrument; one or more microphones; one or more processors configured to: receive second audio data representing detected sound that is detected by the one or more microphones; and generate third audio data based on the first audio data and the second audio data; and a receiver configured to generate output sound based on the third audio data.

Clause 23. The system of Clause 22, wherein the one or more processors are configured to modify the first, second and/or third audio data based on an audiogram of the user.

Clause 24. The system of any of Clauses 22-23, wherein the communication system is further configured to receive an indication of a direction from the vision device, wherein the third audio data represents a version of the detected sound in which portions of the detected sound arriving at the one or more microphones from the direction are enhanced.

Clause 25. The system of any of Clauses 22-24, wherein the one or more microphones are configured to detect second sound; the one or more processors are further configured to: receive fourth audio data representing the second sound that is detected by the one or more microphones; and detect an own-voice signal within the fourth audio data, and optionally, wherein the communication system is configured to send information regarding the own-voice signal to the vision device.

Clause 26. The system of any of Clauses 22-25, wherein the communication system is configured to: transmit first data to the vision device; receive second data from the vision device generated based on the first data; and generate the second audio data based on the first audio data and the second data.

Clause 27. The system of Clause 26, wherein the first data is acoustic classification data.

Clause 28. The system of any of Clauses 22-27, further comprising the vision device, and optionally, wherein the vision device comprises a display system configured to display visible elements representing a list of available audio broadcast transmitters.

Clause 29. The system of any of Clauses 22-28, wherein the one or more processors of the hearing instrument are one or more first processors, and the system further comprises the vision device, wherein the vision device comprises: one or more cameras configured to capture image data of a broadcast code for an audio broadcast source; and one or more second processors configured to process the image data to enable access to the audio broadcast source.

Clause 30. The system of any of Clauses 22-29, further comprising the vision device, wherein the vision device comprises a display system configured to provide information regarding the hearing instrument.

Clause 31. The system of any of Clauses 22-30, further comprising the vision device, wherein the vision device comprises a display system configured to display a user interface that enables the user to control the direction.

Clause 32. The system of Clause 31, wherein the user interface indicates the direction.

Clause 33. The system of any of Clauses 31-32, wherein the user interface enables the user to control a breadth of a beam within which sounds are enhanced.

Clause 34. The system of any of Clauses 22-33, wherein the one or more processors of the hearing instrument are one or more first processors, the system further comprises the vision device, wherein the vision device comprises: one or more speakers; one or more sensors configured to detect a presence of the hearing instrument; and one or more second processors configured to suspend sound generation of the one or more speakers in response to the one or more sensors detecting the presence of the hearing instrument.

Clause 35. The system of any of Clauses 22-34, wherein the one or more microphones of the hearing instrument are one or more first microphones, the one or more processors of the hearing instrument are one or more first processors, and the system further comprises the vision device and the vision device comprises: one or more second microphones; a first antenna configured to communicate with a wireless device; one or more second antennas configured to communicate with the hearing instrument; and one or more second processors configured to: receive the second audio data from the one or more second microphones; use the first antenna to transmit a first wireless signal based on the second audio data to the wireless device; receive fifth audio data via the first antenna; and use the one or more second antennas to transmit one or more second wireless signals based on the fifth audio data to the hearing instrument.

Clause 36. The system of Clause 35, wherein the one or more second antennas are configured to receive indications of own-voice activity from the hearing instrument, the one or more second processors are further configured to: modify the second audio data, based on the indications of the own-voice activity, to generate modified third audio data in which an own-voice signal in the second audio data is enhanced, use the first antenna to transmit the first wireless signal based on the modified third audio data to the wireless device.

Clause 37. The system of any of Clauses 35-36, wherein the wireless device is a mobile phone or a wireless base station.

Clause 38. The system of any of Clauses 22-37, wherein the output sound is a first output sound, the one or more processors of the hearing instrument are one or more first processors, and the system further comprises the vision device and the vision device comprises: one or more sensors; one or more antennas; and one or more second processors configured to: detect, based on data from the one or more sensors, a removal of the vision device or a movement of the vision device relative to the hearing instrument; and based on detecting the removal of the vision device or the movement of the vision device relative to the hearing instrument, using the one or more antennas to transmit a signal to the hearing instrument to instruct the hearing instrument to suppress second output sounds associated with the removal of the vision device or the movement of the vision device relative to the hearing instrument.

Clause 39. The system of any of Clauses 22-38, wherein the hearing instrument is a first hearing instrument, the system further comprises the vision device and a second hearing instrument configured to be worn by the user, the vision device comprises: a first antenna configured to receive first wireless signals from the first hearing instrument, a second antenna, and one or more electrical conductors configured to conduct one or more electrical signals based on the first wireless signals to the second antenna, wherein the second antenna is configured to transmit second wireless signals based on the one or more electrical signals to the second hearing instrument.

Clause 40. The system of Clause 39, wherein a frame interval of the first wireless signals and the second wireless signals to set to a level that maximizes airtime of Bluetooth Low Energy (BLE) links for transmission of the first wireless signals and the second wireless signals.

Clause 41. The system of any of Clauses 39-40, wherein the communication system of the first hearing instrument comprises an antenna configured for wireless communication with the second hearing instrument, and the one or more processors of the hearing instrument are further configured to: detect a removal of the vision device; and in response to detecting the removal of the vision device, use the antenna for ear-to-ear wireless communication with the second hearing instrument.

Clause 42. The system of any of Clauses 22-41, wherein the one or more processors are one or more first processors, and the system includes the vision device and the vision device comprises one or more second processors configured to: determine, based on one or more of audio data or image data, an identity of a speaking person; and generate output indicating the identity of the speaking person.

Clause 43. A system comprising: a hearing instrument configured to be worn by a user, the hearing instrument comprising: a communication system configured to transmit first data to a vision device configured to be worn by the user concurrently with the hearing instrument, wherein the communication system is further configured to receive second data from the vision device generated based on the first data; one or more microphones; one or more processors configured to: receive first audio data representing detected sound that is detected by the one or more microphones; and generate second audio data based on the first audio data and the second data; and a receiver configured to generate output sound based on the second audio data.

Clause 44. The system of Clause 43, wherein the one or more processors are configured to modify the first audio data based on an audiogram of the user.

Clause 45. The system of any of Clauses 43-44, wherein the communication system is configured to receive third audio data from the vision device, and the one or more processors are configured to generate the second audio data based on the first audio data and the third audio data.

Clause 46. The system of any of Clauses 43-45, wherein the one or more microphones are configured to detect second sound; the one or more processors are further configured to: receive third audio data representing second detected sound that is detected by the one or more microphones; and detect an own-voice signal within the third audio data, and the communication system is configured to send information regarding the own-voice signal to the vision device.

Clause 47. The system of any of Clauses 43-46, wherein the communication system is configured to receive an indication of a direction from a vision device, and wherein the second audio data represents a version of the detected sound in which portions of the detected sound arriving at the one or more microphones from the direction are enhanced.

Clause 48. The system of Clause 47, wherein the first data is acoustic classification data.

Clause 49. The system of any of Clauses 43-48, further comprising the vision device, wherein the vision device comprises a display system configured to display visible elements representing a list of available audio broadcast transmitters.

Clause 50. The system of any of Clauses 43-49, wherein the one or more processors of the hearing instrument are one or more first processors, and the system further comprises the vision device, wherein the vision device comprises: one or more cameras configured to capture image data of a broadcast code for an audio broadcast source; and one or more second processors configured to process the image data to enable access to the audio broadcast source.

Clause 51. The system of any of Clauses 43-50, further comprising the vision device, wherein the vision device comprises a display system configured to provide information regarding the hearing instrument.

Clause 52. The system of any of Clauses 43-51, further comprising the vision device, wherein the vision device comprises a display system configured to display a user interface that enables the user to control the direction.

Clause 53. The system of Clause 52, wherein the user interface indicates the direction.

Clause 54. The system of any of Clauses 52-53, wherein the user interface enables the user to control a breadth of a beam within which sounds are enhanced.

Clause 55. The system of any of Clauses 43-54, wherein the one or more processors of the hearing instrument are one or more first processors, the system further comprises the vision device, wherein the vision device comprises: one or more speakers; one or more sensors configured to detect a presence of the hearing instrument; and one or more second processors configured to suspend sound generation of the one or more speakers in response to the one or more sensors detecting the presence of the hearing instrument.

Clause 56. The system of any of Clauses 43-55, wherein the one or more microphones of the hearing instrument are one or more first microphones, the one or more processors of the hearing instrument are one or more first processors, and the system further comprises a vision device and the vision device comprises: one or more second microphones; a first antenna configured to communicate with a wireless device; one or more second antennas configured to communicate with the hearing instrument; and one or more second processors configured to: receive third audio data from the one or more second microphones; use the first antenna to transmit a first wireless signal based on the third audio data to the wireless device; receive fourth audio data via the first antenna; and use the one or more second antennas to transmit one or more second wireless signals based on the fourth audio data to the hearing instrument.

Clause 57. The system of Clause 56, wherein the one or more second antennas are configured to receive indications of own-voice activity from the hearing instrument, the one or more second processors are further configured to: modify the third audio data, based on the indications of the own-voice activity, to generate modified third audio data in which an own-voice signal in the third audio data is enhanced, use the first antenna to transmit the first wireless signal based on the modified third audio data to the wireless device.

Clause 58. The system of any of Clauses 56-57, wherein the wireless device is a mobile phone or a wireless base station.

Clause 59. The system of any of Clauses 43-58, wherein the output sound is a first output sound, the one or more processors of the hearing instrument are one or more first processors, and the system further comprises the vision device and the vision device comprises: one or more sensors; one or more antennas; and one or more second processors configured to: detect, based on data from the one or more sensors, a removal of the vision device or a movement of the vision device relative to the hearing instrument; and based on detecting the removal of the vision device or the movement of the vision device relative to the hearing instrument, using the one or more antennas to transmit a signal to the hearing instrument to instruct the hearing instrument to suppress second output sounds associated with the removal of the vision device or the movement of the vision device relative to the hearing instrument.

Clause 60. The system of any of Clauses 43-59, wherein the hearing instrument is a first hearing instrument, the system further comprises the vision device and a second hearing instrument configured to be worn by the user, the vision device comprises: a first antenna configured to receive first wireless signals from the first hearing instrument, a second antenna, and one or more electrical conductors configured to conduct one or more electrical signals based on the first wireless signals to the second antenna, wherein the second antenna is configured to transmit second wireless signals based on the one or more electrical signals to the second hearing instrument.

Clause 61. The system of Clause 60, wherein a frame interval of the first wireless signals and the second wireless signals to set to a level that maximizes airtime of Bluetooth Low Energy (BLE) links for transmission of the first wireless signals and the second wireless signals.

Clause 62. The system of any of Clauses 60-61, wherein the communication system of the first hearing instrument comprises an antenna configured for wireless communication with the second hearing instrument, and the one or more processors of the hearing instrument are further configured to: detect a removal of the vision device; and in response to detecting the removal of the vision device, use the antenna for ear-to-ear wireless communication with the second hearing instrument.

Clause 63. The system of any of Clauses 43-62, wherein the one or more processors are one or more first processors, and the system includes the vision device and the vision device comprises one or more second processors configured to: determine, based on one or more of audio data or image data, an identity of a speaking person; and generate output indicating the identity of the speaking person.

Clause 64. A system comprising: a hearing instrument configured to be worn by a user, the hearing instrument comprising: a communication system; one or more microphones; one or more first processors; and a receiver configured to generate output sound; and a vision device configured to be worn by the user concurrently with the hearing instrument, wherein the vision device comprises: one or more cameras configured to capture image data of a broadcast code for an audio broadcast source; and one or more second processors configured to process the image data to enable access by the hearing instrument and/or the vision device to the audio broadcast source.

Clause 65. The system of Clause 64, wherein the one or more processors are configured to modify the first audio data based on an audiogram of the user.

Clause 66. The system of any of Clauses 64-65, wherein the communication system is configured to receive third audio data from the vision device, and the one or more processors are configured to generate the second audio data based on the first audio data and the third audio data.

Clause 67. The system of any of Clauses 64-66, wherein the one or more microphones are configured to detect second sound; the one or more processors are further configured to: receive third audio data representing second detected sound that is detected by the one or more microphones; and detect an own-voice signal within the third audio data, and the communication system is configured to send information regarding the own-voice signal to the vision device.

Clause 68. The system of any of Clauses 64-67, wherein the communication system is configured to: transmit first data to the vision device; receive second data from the vision device generated based on the first data; and generate the second audio data based on the first audio data and the second data.

Clause 69. The system of Clause 68, wherein the first data is acoustic classification data.

Clause 70. The system of any of Clauses 64-69, further comprising the vision device, wherein the vision device comprises a display system configured to display visible elements representing a list of available audio broadcast transmitters.

Clause 71. The system of any of Clauses 64-71, wherein the communication system configured to receive an indication of a direction from the vision device and wherein the one or more first processors are configured to: receive first audio data representing detected sound that is detected by the one or more microphones; and generate second audio data based on the first audio data, wherein the second audio data represents a version of the detected sound in which portions of the detected sound arriving at the one or more microphones from the direction are enhanced; and a receiver configured to generate output sound based on the second audio data.

Clause 72. The system of any of Clauses 64-71, further comprising the vision device, wherein the vision device comprises a display system configured to provide information regarding the hearing instrument.

Clause 73. The system of any of Clauses 64-72, further comprising the vision device, wherein the vision device comprises a display system configured to display a user interface that enables the user to control the direction.

Clause 74. The system of Clause 73, wherein the user interface indicates the direction.

Clause 75. The system of any of Clauses 73-74, wherein the user interface enables the user to control a breadth of a beam within which sounds are enhanced.

Clause 76. The system of any of Clauses 64-75, wherein the one or more processors of the hearing instrument are one or more first processors, the system further comprises the vision device, wherein the vision device comprises: one or more speakers; one or more sensors configured to detect a presence of the hearing instrument; and one or more second processors configured to suspend sound generation of the one or more speakers in response to the one or more sensors detecting the presence of the hearing instrument.

Clause 77. The system of any of Clauses 64-76, wherein the one or more microphones of the hearing instrument are one or more first microphones, the one or more processors of the hearing instrument are one or more first processors, and the system further comprises the vision device and the vision device comprises: one or more second microphones; a first antenna configured to communicate with a wireless device; one or more second antennas configured to communicate with the hearing instrument; and one or more second processors configured to: receive third audio data from the one or more second microphones; use the first antenna to transmit a first wireless signal based on the third audio data to the wireless device; receive fourth audio data via the first antenna; and use the one or more second antennas to transmit one or more second wireless signals based on the fourth audio data to the hearing instrument.

Clause 78. The system of Clause 77, wherein the one or more second antennas are configured to receive indications of own-voice activity from the hearing instrument, the one or more second processors are further configured to: modify the third audio data, based on the indications of the own-voice activity, to generate modified third audio data in which an own-voice signal in the third audio data is enhanced, use the first antenna to transmit the first wireless signal based on the modified third audio data to the wireless device.

Clause 79. The system of any of Clauses 77-78, wherein the wireless device is a mobile phone or a wireless base station.

Clause 80. The system of any of Clauses 64-79, wherein the output sound is a first output sound, the one or more processors of the hearing instrument are one or more first processors, and the system further comprises the vision device and the vision device comprises: one or more sensors; one or more antennas; and one or more second processors configured to: detect, based on data from the one or more sensors, a removal of the vision device or a movement of the vision device relative to the hearing instrument; and based on detecting the removal of the vision device or the movement of the vision device relative to the hearing instrument, using the one or more antennas to transmit a signal to the hearing instrument to instruct the hearing instrument to suppress second output sounds associated with the removal of the vision device or the movement of the vision device relative to the hearing instrument.

Clause 81. The system of any of Clauses 64-80, wherein the hearing instrument is a first hearing instrument, the system further comprises the vision device and a second hearing instrument configured to be worn by the user, the vision device comprises: a first antenna configured to receive first wireless signals from the first hearing instrument, a second antenna, and one or more electrical conductors configured to conduct one or more electrical signals based on the first wireless signals to the second antenna, wherein the second antenna is configured to transmit second wireless signals based on the one or more electrical signals to the second hearing instrument.

Clause 82. The system of Clause 81, wherein a frame interval of the first wireless signals and the second wireless signals to set to a level that maximizes airtime of Bluetooth Low Energy (BLE) links for transmission of the first wireless signals and the second wireless signals.

Clause 83. The system of any of Clauses 81-82, wherein the communication system of the first hearing instrument comprises an antenna configured for wireless communication with the second hearing instrument, and the one or more processors of the hearing instrument are further configured to: detect a removal of the vision device; and in response to detecting the removal of the vision device, use the antenna for ear-to-ear wireless communication with the second hearing instrument.

Clause 84. The system of any of Clauses 64-83, wherein the one or more processors are one or more first processors, and the system includes the vision device and the vision device comprises one or more second processors configured to: determine, based on one or more of audio data or image data, an identity of a speaking person; and generate output indicating the identity of the speaking person.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processing circuits to retrieve instructions, code and/or data structures for implementation of the techniques described in this disclosure. A computer program product may include a computer-readable medium.

By way of example, and not limitation, such computer-readable storage media may include RAM, ROM, EEPROM, CD-ROM or other optical disk storage, magnetic disk storage, or other magnetic storage devices, flash memory, cache memory, or any other medium that can be used to store desired program code in the form of instructions or store data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Functionality described in this disclosure may be performed by fixed function and/or programmable processing circuitry. For instance, instructions may be executed by fixed function and/or programmable processing circuitry. Such processing circuitry may include one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements. Processing circuits may be coupled to other components in various ways. For example, a processing circuit may be coupled to other components via an internal device interconnect, a wired or wireless network connection, or another communication medium.

The techniques of this disclosure may be implemented in a wide variety of devices or apparatuses, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware. Various examples have been described. These and other examples are within the scope of the following claims.

## Claims

1. A system comprising:
a hearing instrument configured to be worn by a user, the hearing instrument comprising:
a communication system configured to receive an indication of a direction from a vision device configured to be worn by the user concurrently with the hearing instrument;
one or more microphones;
one or more processors configured to:
receive first audio data representing detected sound that is detected by the one or more microphones; and
generate second audio data based on the first audio data, wherein the second audio data represents a version of the detected sound in which portions of the detected sound arriving at the one or more microphones from the direction are enhanced; and
a receiver configured to generate output sound based on the second audio data.

2. The system of claim 1, wherein the one or more processors are configured to modify the first audio data based on an audiogram of the user.

3. The system of claim 1 or claim 2, wherein:
the communication system is configured to receive third audio data from the vision device, and
the one or more processors are configured to modify the second audio data based on the first audio data and the third audio data.

4. The system of claim 1 or claim 2, wherein:
the one or more microphones are configured to detect second sound;
the one or more processors are further configured to:
receive third audio data representing second detected sound that is detected by the one or more microphones; and
detect an own-voice signal within the third audio data, and
the communication system is configured to send information regarding the own-voice signal to the vision device.

5. The system of any of claims 1 to 4, wherein the communication system is configured to:
transmit first data to the vision device;
receive second data from the vision device generated based on the first data; and
generate the second audio data based on the first audio data and the second data.

6. The system of any of claims 1 to 5, further comprising the vision device.

7. The system of claim 6, wherein:
the one or more processors of the hearing instrument are one or more first processors, and
wherein the vision device comprises:
one or more cameras configured to capture image data of a broadcast code for an audio broadcast source; and
one or more second processors configured to process the image data to enable access to the audio broadcast source.

8. The system of claim 6, wherein the vision device comprises a display system configured to display a user interface that enables the user to control the direction and/or wherein the vision device comprises a display system configured to display visible elements representing a list of available audio broadcast transmitters.

9. The system of claim 6, wherein:
the one or more processors of the hearing instrument are one or more first processors, wherein the vision device comprises:
one or more speakers;
one or more sensors configured to detect a presence of the hearing instrument; and
one or more second processors configured to suspend sound generation of the one or more speakers in response to the one or more sensors detecting the presence of the hearing instrument.

10. The system of claim 6, wherein:
the one or more microphones of the hearing instrument are one or more first microphones, the one or more processors of the hearing instrument are one or more first processors, wherein the vision device comprises:
one or more second microphones;
a first antenna configured to communicate with a wireless device;
one or more second antennas configured to communicate with the hearing instrument; and
one or more second processors configured to:
receive third audio data from the one or more second microphones;
use the first antenna to transmit a first wireless signal based on the third audio data to the wireless device;
receive fourth audio data via the first antenna; and
use the one or more second antennas to transmit one or more second wireless signals based on the fourth audio data to the hearing instrument.

11. The system of claim 10, wherein:
the one or more second antennas are configured to receive indications of own-voice activity from the hearing instrument, and
the one or more second processors are further configured to:
modify the third audio data, based on the indications of the own-voice activity, to generate modified third audio data in which an own-voice signal in the third audio data is enhanced, and
use the first antenna to transmit the first wireless signal based on the modified third audio data to the wireless device.

12. The system of claim 6, wherein:
the output sound is a first output sound,
the one or more processors of the hearing instrument are one or more first processors, wherein the vision device comprises:
one or more sensors;
one or more antennas; and
one or more second processors configured to:
detect, based on data from the one or more sensors, a removal of the vision device or a movement of the vision device relative to the hearing instrument; and
based on detecting the removal of the vision device or the movement of the vision device relative to the hearing instrument, using the one or more antennas to transmit a signal to the hearing instrument to instruct the hearing instrument to suppress second output sounds associated with the removal of the vision device or the movement of the vision device relative to the hearing instrument.

13. The system of claim 6, wherein:
the hearing instrument is a first hearing instrument,
the system further comprises a second hearing instrument configured to be worn by the user, and
wherein the vision device comprises:
a first antenna configured to receive first wireless signals from the first hearing instrument,
a second antenna, and
one or more electrical conductors configured to conduct one or more electrical signals based on the first wireless signals to the second antenna, wherein the second antenna is configured to transmit second wireless signals based on the one or more electrical signals to the second hearing instrument.

14. The system of claim 13, wherein a frame interval of the first wireless signals and the second wireless signals to set to a level that maximizes airtime Bluetooth Low Energy (BLE) links for transmission of the first wireless signals and the second wireless signals.

15. The system of claim 13 or claim 14, wherein:
the communication system of the first hearing instrument comprises an antenna configured for wireless communication with the second hearing instrument, and
the one or more processors of the hearing instrument are further configured to:
detect a removal of the vision device; and
in response to detecting the removal of the vision device, use the antenna for ear-to-ear wireless communication with the second hearing instrument.
